# EUROPÄISCHE PATENTSCHRIFT

(11) **EP 1 272 776 B1**
(45) Veröffentlichungstag und Bekanntmachung des Hinweises auf die Patenterteilung: **26.07.2006**
(21) Anmeldenummer: 01940128.0
(22) Anmeldetag: 09.04.2001
(51) Int. Cl.: F16F 15/133, F16F 15/121

(54) **FEDERELEMENT, INSBESONDERE FÜR TORSIONSSCHWINGUNGSDÄMPFER**
SPRING ELEMENT, IN PARTICULAR FOR A TORSIONAL VIBRATION DAMPER
ELEMENT RESSORT, NOTAMMENT POUR AMORTISSEUR D'OSCILLATIONS DE TORSION

(30) Priorität: 08.04.2000 DE 10017688
(43) Veröffentlichungstag der Anmeldung: 08.01.2003
(73) Patentinhaber: Rohs-Voigt Patentverwertungsgesellschaft mbH, 52351 Düren (DE)
(72) Erfinder: ROHS, Ulrich, 52351 Düren (DE); DRÄGER, Christoph, 52459 Inden (DE); BRANDWITTE, Werner, 52379 Langerwehe (DE); HEIDINGFELD, Dietmar, 52078 Aachen (DE)
(74) Vertreter: Castell, Klaus
(86) Internationale Anmeldenummer: PCT/DE2001/001378
(87) Internationale Veröffentlichungsnummer: WO 2001/077543

(56) Entgegenhaltungen:
- DE-A- 2 148 043
- DE-A- 3 625 896
- DE-A- 3 831 515
- DE-A- 19 641 695
- DE-B- 1 285 339
- DE-C- 4 136 221
- FR-A- 1 320 363
- FR-A- 2 510 693
- FR-A- 2 783 296
- US-A- 4 911 278

## Beschreibung

Die Erfindung betrifft die Anordnung eines Federelementes insbesondere für Torsionsschwingungsdämpfer.

Für Torsionsschwingungsdämpfer werden im wesentlichen Spiralfedern verwendet, die mit einer Reibeinrichtung zusammenwirken. Als Reibeinrichtung können durch einen Engpass gedrückte Fluide oder mechanische Reibflächen verwendet werden.

Bekannte Torsionsschwingungsdämpfer sind aus einer Vielzahl an Teilen hergestellt, die zu hohen Herstellungskosten führen.

Das Dokument DE-A-3 831 515 zeigt die Merkmale des Oberbegriffs von Anspruch 1.

Der Erfindung liegt die Aufgabe zugrunde, ein neues Federelement vorzuschlagen, das einen einfachen Aufbau eines Torsionsschwingungs-dämpfers ermöglicht und für weitere Einsatzzwecke verwendet werden kann.

Diese Aufgabe wird mit einer Anordnung eines Federelementes gelöst, die die Merkmale von Anspruch 1 aufweist.

Das gesamte Federelement ist aus sehr wenigen, extrem günstig herstellbaren Bauteilen zusammensetzbar. Es ist somit günstig in der Herstellung. Außerdem lässt sich das Federelement auf engstem axialem Bauraum realisieren und es ist mit verschiedenstartigen Dämpfungseinrichtungen kombinierbar.

Das Federblatt kann gegen den Wälzkörper vorgespannt sein, um auch bei starken mechanischen Beeinträchtigungen, wie bei Schwingungen oder Radialkräften den Wälzkörper sicher zu halten.

Weitere vorteilhafte Einzelheiten des Federelementes ergeben sich aus den Unteransprüchen.

Vorteilhaft ist es beispielsweise, wenn das Federblatt eine Versteifungssicke aufweist. Eine derartige Sicke ermöglicht es bei geringen Materialkosten Federblätter mit extrem hoher Steifigkeit herzustellen. Außerdem können in ihren Abmessungen identische Federblätter durch die Ausbildung von Sicken unterschiedliche Charakteristika aufweisen, die auf den jeweiligen Anwendungsfall abgestimmt sind.

Um die Wälzkörper auf sicheren Bahnen zu lenken, wird vorgeschlagen, dass das Federblatt eine Führung für die Wälzkörper aufweist.

Diese Führung wird vorteilhafterweise durch eine zumindest teilweise Verformung des Federblattes gebildet. Das Federblatt nimmt somit nicht nur Anpress- sondern auch Führungsaufgaben wahr.

Eine einfache Ausführungsform sieht vor, dass die Führung des Federblattes zumindest teilweise durch einen Durchbruch im Federblatt gebildet ist. Beispielsweise ein rautenförmiger Durchbruch erlaubt gleichzeitig eine Führung des Wälzkörpers und eine Verschiebung des Wälzkörpers in axialer Richtung.

Um Federblatt und Anschlag bei ihrer Relativbewegung zueinander auseinander zu bewegen, wird vorgeschlagen, dass die Führung des Federblattes an in Bewegungsrichtung gegenüberliegenden Enden eine gegenläufige konische Form aufweist. Das Verengen der Führungen in diesen sich gegenüberliegenden Bereichen führt dazu, dass der Wälzkörper - wenn er in diesen Bereich gelangt - Anschlag und Federblatt auseinander drückt.

Da Anschlag und Federblatt nur auf einer bestimmten Strecke oder auf einem bestimmten Drehwinkel relativ zueinander drehbeweglich sein sollen, wird vorgeschlagen, dass die Führung des Federblattes die mögliche Relativbewegung zwischen Federblatt und Anschlag begrenzt. Hierzu kann die Führung an in Bewegungsrichtung gegenüberliegenden Enden eine besonders steile Neigung aufweisen, die die Bahn des Wälzkörpers begrenzt und einen sanften Anschlag bewirkt.

In dem Bereich, in dem eine besonders kleine Reibung zwischen dem Wälzkörper und dem Federblatt erstrebenswert ist, wird vorgeschlagen, die Führung des Federblattes für eine punkt- oder linienförmige Berührung zwischen Federblatt und Wälzkörper auszubilden. Dies wird beispielsweise dadurch erzielt, dass bei einem kugelförmigen Wälzkörper der Radius der Führung geringfügig größer ist als der Radius der Kugel.

In Bereichen, in denen eine erhöhte Dämpfung gewünscht wird, wird vorgeschlagen, dass die Führung des Federblattes für eine flächige Berührung zwischen Federblatt und Wälzkörper ausgebildet ist. Bei einem kugelförmigen Wälzkörper wird dies beispielsweise mit einer Führung erreicht, die eine Rinne mit einem Radius aufweist, der dem Radius des Wälzkörpers nahe kommt.

Eine Führung kann aber auch durch ein besonders elastisches oder plastisch verformbares Federelement erzielt werden, das sich bei einem Druck des Wälzkörpers auf das Federblatt etwas um den Wälzkörper herum verformt.

Um eine besonders große Dämpfung im Bereich des ersten Anlagebereiches zwischen Federblatt und Wälzkörper zu erzielen, wird vorgeschlagen, an dieser Stelle eine Reibfläche vorzusehen. Die Führung kann hierdurch gleichzeitig die Funktion einer Dämpfungseinrichtung wahrnehmen.

Um die gesamte Federlänge oder bei Tellerfedern den gesamten Federradius in seiner Federkraft zu nutzen, wird vorgeschlagen, dass der erste Anlagebereich in einem Randbereich des Federblattes angeordnet ist.

Bisher wurde vorgeschlagen, die Führung für den Wälzkörper im Bereich des Federblattes anzuordnen. Zusätzlich oder alternativ kann die Führung auch am Anschlag vorgesehen werden.

Auch im Bereich des Anschlags kann die Führung zumindest teilweise durch eine Verformung des Anschlags gebildet sein. Ebenso kann die Führung des Anschlags zumindest teilweise durch einen Durchbruch im Anschlag gebildet sein und die Führung des Anschlags kann an in Bewegungsrichtung gegenüberliegenden Enden eine gegenläufige konische Form aufweisen.

Außerdem kann die Führung des Anschlags auch die mögliche Relativbewegung zwischen Federblatt und Anschlag begrenzen.

Letztlich kann die Führung des Anschlags ebenso, wie beim Federblatt, zumindest bereichsweise für eine linienförmige oder eine flächige Berührung zwischen Anschlag und Wälzkörper ausgebildet sein.

Um die Dämpfung zu erhöhen, kann auch der zweite Anlagebereich eine Reibfläche aufweisen.

Die Federblätter ermöglichen mannigfache Ausführungsvarianten. So können beispielsweise mehrere Federblätter radial hintereinander geschaltet sein oder es können mehrere Federblätter axial hintereinander angeordnet werden.

Die Verwendung mehrerer sich gegenüberliegender Federblätter mit dazwischenliegenden Wälzkörpern erlaubt es, eine Einheit aus Federblättern und Wälzkörpern und gegebenenfalls einem dazwischen angeordneten Anschlag vorzumontieren. Hierbei werden die Federblätter vorzugsweise durch Nieten miteinander verbunden.

In einem bevorzugten Ausführungsbeispiel werden als Wälzkörper Kugeln verwendet. Es ist jedoch auch möglich, als Wälzkörper Walzen einzusetzen. Diese Walzen können auch einen ovalen Querschnitt aufweisen, um bei einer Relativbewegung zwischen Anschlag und Federblatt den Abstand zwischen den Teilen zu vergrößern.

Da das Federelement mit möglichst wenig Fett oder sogar ohne Fett auskommen soll, wird vorgeschlagen, für die Wälzkörper ein besonders hartes Material wie Titan oder Keramik zu verwenden. Eine preislich besonders günstige Variante sieht Wälzkörper aus Stahl vor.

Je nach Anwendungsfall kann im Bereich des Wälzkörpers auch ein Schmiermittel vorgesehen sein.

Um eine ausgewogene Kräfteverteilung zu erzielen und die Wälzkörper nicht zu stark zu beanspruchen, wird vorgeschlagen, dass vorzugsweise mehrere Wälzkörper parallel geschaltet angeordnet sind.

Ein Federelement für Rotationsbewegungen weist in einer einfachen Ausführungsform einen Anschlag auf, der an ein auf einer Achse befestigtes erstes Bauteil angrenzt. Dieses erste Bauteil ist vorzugsweise eine Antriebsscheibe, die mit der Achse fest verbunden ist.

Der Anschlag ist mit dem ersten Bauteil vorzugsweise durch Schweißen verbunden. Eine gute Verbindung wird jedoch auch durch einen Formschluss erzielt der vorzugsweise durch Sicken oder Falzen realisiert wird. Eine alternative Ausführungsform sieht vor, dass der Anschlag mit dem ersten Bauteil durch Kraftschluss wie beispielsweise durch einen Presssitz verbunden ist.

Um ein optimal abgestimmtes Schwingungsverhalten des ersten Bauteils zu erzielen, wird vorgesehen, dass das erste Bauteil eine Zusatzmasse aufweist. Diese Zusatzmasse ermöglicht es, die Masse des ersten Bauteils definiert zu variieren. Bei der Ausbildung des ersten Bauteils als Antriebsscheibe wird die Zusatzmasse vorzugsweise am radial äußeren Rand angebracht, um mit möglichst wenig Masse ein großes Trägheitsmoment zu bewirken.

Als bevorzugte Anwendung wird das erste Bauteil zusammen mit dem Anschlag als Primärteil eines Torsionsschwingungsdämpfers ausgebildet. Es ist somit vorzugsweise mit einer vom Motor angetriebenen Achse verbindbar, weist vorteilhafterweise eine scheibenförmige radiale Erstreckung auf und kann im radial äußeren Bereich eine Gebermarke aufweisen. Im äußersten Bereich befindet sich dann die Zusatzmasse, die sich konzentrisch zur mit dem Motor verbundenen Achse erstreckt.

Für den praktischen Einsatz des Federelementes wird vorgesehen, dass das Federblatt an ein, vorzugsweise auf einer Achse gelagertes zweites Bauteil angrenzt. Das zweite Bauteil kann im wesentlichen durch die Verbindung zwischen Feder, Wälzkörper und Anschlag gelagert sein oder im wesentlichen auf einer Achse gelagert sein. Je nach Anwendungsfall überwiegt die Lagerfunktion an der einen oder anderen Stelle.

Vorteilhaft ist es, wenn das zweite Bauteil als Sekundärteil eines Torsionsschwingungsdämpfers ausgebildet ist. Dieses Sekundärteil weist dann eine Einrichtung zur Befestigung an einer Kupplung auf. Es ist vorzugsweise als rotationssymmetrische Scheibe mit zwei gegenläufig ausgebildeten Flanschen ausgebildet.

Eine Ausführungsvariante sieht vor, dass das Federblatt mit dem zweiten Bauteil durch Formschluss, vorzugsweise durch Nieten verbunden ist. Dies ist günstig in der Herstellung und hat sich in der Praxis gut bewährt.

Als Alternative dazu wird vorgesehen, dass das Federblatt mit dem zweiten Bauteil durch Schrauben verbunden ist.

Besonders vorteilhaft ist es, wenn zwischen Federblatt und zweitem Bauteil ein Abschirmblech angeordnet ist. Dieses Abschirmblech zwischen Federblatt und zweitem Bauteil ist vorzugsweise mit dem ersten Bauteil verbunden und erstreckt sich dann von radial außen nach innen. Es dient dazu, Staubpartikel, die von außen, beispielsweise von der Kupplung zum Federblatt getragen werden, fernzuhalten, damit der Abwälzvorgang zwischen den Wälzkörpern, dem Federblatt und dem Anschlag nicht beeinträchtigt wird. Sowohl bei einem trockenen als auch bei einem gefetteten Betrieb des Federelementes ist durch den Aufbau des Federelementes darauf zu achten, dass in den Bereich der Wälzkörper keine Schmutzpartikel eindringen.

Wie zuvor erwähnt ist es möglich, das Federblatt und das zweite Bauteil ohne eine weitere Lagerung zu halten. Es wird jedoch vorgeschlagen, zwischen dem zweiten Bauteil und der Achse ein Lager anzuordnen. Dieses Lager ist vorzugsweise radial innerhalb der Wälzkörper vorgesehen.

Das Lager kann zwischen dem zweiten Bauteil und Achse eine Lagerschale aufweisen, die vorzugsweise L-förmig ausgebildet ist. Dadurch wird mit einer Lagerschale sowohl ein Axiallager als auch ein Radiallager gebildet.

Um den spezifischen Lageranforderungen im Bereich des Radiallagers und des Axiallagers gerecht zu werden oder um an definierten Bereichen eine Dämpfung zu bewirken, wird vorgeschlagen, dass die Lagerschale ein Axiallager mit einem ersten Schalenelement und ein Radiallager mit einem zweiten Schalenelement aufweist. Diese Schalenelemente können somit aus verschiedenen Materialien hergestellt werden und somit optimal angepasst werden. Verständlicherweise kann auch ein L-förmig ausgebildetes Schalenelement aus zwei verschiedenen Materialien bestehen, um die gleich Funktion zu erfüllen.

Zusätzlich oder alternativ zur Lagerung im Bereich einer zentralen Achse kann auch der erste und/oder zweite Anlagebereich als Lager ausgebildet sein. Dadurch wird im Bereich der Wälzkörper eine Lagerfunktion erreicht, die die zentrale Lagerung ersetzen oder zumindest unterstützen kann.

Bei einer Ausführungsvariante mit einem ersten und einem zweiten Bauteil wird vorgeschlagen, dass eine äußere Umfangsfläche des ersten Bauteils und eine innere Umfangsfläche des zweiten Bauteils als Lager ausgebildet sind. Die äußere Umfangsfläche des ersten Bauteils kann einstückig mit dem ersten Bauteil ausgebildet oder als weiteres Element mit dem ersten Bauteil verbunden sein.

Ein vorteilhafter Aufbau des Federelementes sieht vor, dass von der Achse beabstandet zwischen erstem und zweitem Bauteil ein Lager ausgebildet ist. Dies erlaubt es, die Wälzkörper radial außerhalb der Lager anzuordnen.

Das Federblatt kann verschiedenstartige Ausformungen aufweisen und es können ein oder mehrere Federblätter für ein Federelement Verwendung finden. Vorteilhaft ist es, wenn das Federelement im wesentlichen punktsymmetrisch zu einer Drehachse aufgebaut ist. In diesem Fall können beispielsweise tangential angeordnete Blattfedern verwendet werden. Besonders vorteilhaft ist es jedoch, wenn das Federblatt als Tellerfeder ausgebildet ist. Die Ausbildung als Tellerfeder erlaubt einen besonders einfachen Aufbau und erschließt die Möglichkeit auf einfache Art und Weise eine Tellerfeder mit vielen Wälzkörpern zusammenwirken zu lassen.

Ein interessanter Aufbau ergibt sich dadurch, dass auch der Anschlag oder nur der Anschlag eine Tellerfeder aufweist. Dadurch kann mehr Bauraum in axialer Richtung des Federelementes für die Federfunktion genutzt werden.

Anschlag und Federblatt könnten lateral beweglich zueinander ausgebildet sein. Vorteilhaft im Hinblick auf einen kompakten Aufbau des Federelementes ist es jedoch, wenn der Anschlag und das Federblatt drehbeweglich relativ zueinander gelagert sind. Dies ist insbesondere bei der Verwendung einer Tellerfeder von großem Vorteil.

Eine in vielen Fällen geforderte Taumelweichheit des Federelementes wird erzielt, indem erster und/oder zweiter Anlagebereich zur Drehbeweglichkeit eine zusätzliche Beweglichkeit zwischen Anschlag und Federblatt ermöglichen. Während für die Verbiegung des Federblattes und somit für die Grundfunktion des Federelementes die rotatorische Beweglichkeit zwischen Anschlag und Federblatt dient, werden axiale oder windschiefe Kräfte durch die zusätzliche Beweglichkeit zwischen Anschlag und Federblatt ausgeglichen.

Für den Einsatz als Schwingungsdämpfer wird vorgesehen, dass das Federelement ein Dämpfungsmittel aufweist. Als Dämpfungsmittel können selbstverständlich alle im Bereich der Torsionsschwingungsdämpfer bekannten Dämpfungseinrichtungen, wie insbesondere hydraulische und mechanische Dämpfer Verwendung finden.

Vorteilhaft ist es, wenn das Dämpfungsmittel am Federblatt oder am zweiten Bauteil angeordnet ist und gegen den Anschlag oder das erste Bauteil wirkt. Das Dämpfungsmittel kann dabei sowohl am radial äußeren Bereich des Federblattes als auch am radial inneren Bereich des Federblattes angeordnet sein. Je nach Aufbau des Federelementes ist hierbei die konstruktiv einfachste und wirksamste Anordnung zu wählen.

Eine weitere Ausführungsform sieht vor, dass das Dämpfungsmittel am Anschlag oder am ersten Bauteil angeordnet ist und gegen das Federblatt oder das zweite Bauteil wirkt. Auch diese dem zuvor beschriebenen Aufbau entgegengesetzte Wirkweise ermöglicht die Anbringung eines Dämpfungsmittels für das erfindungsgemäße Federelement. Insbesondere bei dieser Variante ist es vorteilhaft, wenn das Dämpfungsmittel zwischen dem radial äußeren Ende des Federblattes und dem radial inneren Ende des Federblattes angeordnet ist, da in diesem Zwischenbereich in den meisten Fällen genügend Bauraum für zusätzliche Dämpfungsmittel zur Verfügung steht.

Vorteilhaft ist es, wenn das Dämpfungsmittel eine Wirkfläche mit einer Feinprofilierung aufweist. Diese Reibfläche wandelt Torsionsschwingungsenergie in Wärme um und führt somit zu einer effektiven Dämpfung.

Weiterhin wird vorgeschlagen, dass das Dämpfungsmittel eine Wirkfläche mit einer axialen Steigung aufweist. Wenn das Federelement im wesentlichen punktsymmetrisch zu einer Drehachse aufgebaut ist, bewirkt diese axiale Steigung bei rotatorischer Bewegung des Federblattes eine Auslenkung des Federblattes und des gegen das Federblatt wirkenden Dämpfungsmittels und damit eine erhöhte Krafteinwirkung im Bereich der Reibfläche, die eine verstärkte Dämpfung zur Folge hat.

Das Dämpfungsmittel kann jedoch auch eine Wirkfläche mit einer radialen Steigung aufweisen. Auch in diesem Fall können Wirkfläche und Gegenfläche so gestaltet werden, dass bei einer Relativbewegung der Flächen zueinander eine erhöhte Anpresskraft und damit eine erhöhte Reibung erzeugt wird.

Eine einfache Steuerung der Dämpfung wird dadurch erzielt, dass ein Teil der Wirkfläche ohne Steigung ausgebildet ist. Während in diesem Bereich die Dämpfung sehr gering ist oder überhaupt nicht vorhanden ist, entsteht in den anderen Bereichen eine erhöhte Anpresskraft und somit eine erhöhte Dämpfung. Insbesondere bei nur geringen Bewegungen zwischen Anschlag und Federblatt ermöglicht diese Steuerung die Dämpfung gering zu halten oder auszusetzen, während bei einer größeren Bewegung der Elemente relativ zueinander eine erhöhte Dämpfung wirksam wird.

Eine weitere Steuerungseinrichtung sieht vor, dass die Dämpfung relativ zur Geschwindigkeit der rotatorischen Bewegung von Anschlag und Federblatt variiert wird. Hierzu wird vorgesehen, dass das Dämpfungsmittel eine Masse aufweist, die bei einer Drehung derart einer Zentrifugalkraft ausgesetzt ist, dass sie die Dämpfung verändert. Beispielsweise kann die Zentrifugalkraft eine radiale Kraftkomponente bewirken, die direkt auf ein radial anliegendes Dämpfungsmittel wirkt oder indirekt die Anlagekraft eines axial oder diagonal anliegenden Dämpfungsmittels verändert.

Eine hohe Dämpfungskraft und ein einfacher mechanischer Aufbau können beispielsweise dadurch erzielt werden, dass das Dämpfungsmittel eine Dämpfungstellerfeder aufweist.

Je nach Aufbau des Federelementes kann es hierbei von Vorteil sein, dass die Dämpfungstellerfeder koaxial zum Federelement angeordnet ist oder dass die Dämpfungstellerfeder radial von einer Drehachse versetzt angeordnet ist. Dies ermöglicht es, große Dämpfungskräfte gleichmäßig verteilt am Umfang des Federelementes wirken zu lassen.

Eine weitere Möglichkeit der Dämpfung wird dadurch eröffnet, dass das Federblatt derart ausgebildet ist, dass sich infolge der auf der Masse der Feder wirkenden Zentrifugalkraft bei einer Rotation die Anpresskraft des Federblattes an die Wälzkörper verändert. Dies ermöglicht es ohne zusätzliche Konstruktionsteile eine Dämpfungseinrichtung vorzusehen.

Dieser Vorteil kann auch dadurch erzielt werden, dass das Federblatt derart ausgebildet ist, dass sich bei einer Rotation die Anpresskraft des Federblattes an eine Lagerschale verändert. Durch die veränderte Anpresskraft ändert sich die Reibung und somit die Dämpfung des Systems.

Eine weitere Anpassungsmöglichkeit des erfindungsgemäßen Systems an unterschiedliche Anforderungen wird dadurch erzielt, dass zwei auf sich gegenüberliegenden Seiten des Anschlags angeordnete Federblätter unterschiedliche Federstärken aufweisen.

Außerdem entstehen weitere Effekte dadurch, dass auf sich gegenüberliegenden Seiten des Anschlags angeordnete Wälzkörper auf divergierenden und/oder konvergierenden Bahnen geführt sind.

Eine einfache Ausführungsart eines Dämpfungsmittels sieht vor, dass es mindestens einen sich in Umfangsrichtung erstreckenden Arm aufweist, der vorzugsweise radial gegen eine Reibfläche wirkt. Hierbei ist es vorteilhaft, wenn der Arm mit dem Anschlag oder dem ersten Bauteil und die Reibfläche mit dem Federblatt verbunden ist.

Das Federelement ist vor allem für mechanische Torsionsschwingungsdämpfer einsetzbar. Es eignet sich jedoch auch für beliebige andere Torsionsschwingungsdämpfer, wie beispielsweise einen Trilokwandler.

Beispielsweise die Anordnung von Reibbelägen an unterschiedlichen Positionen kann die Dämpfungseigenschaften des Federelementes erhöhen. Ein vorteilhaftes Ausführungsbeispiel sieht vor, dass die Position der Anlagebereiche so gewählt ist, dass zwischen Federblatt und Anschlag ein Zwangsschlupf entsteht.

Ein derartiger Zwangsschlupf kann dadurch erzielt werden, dass zwei drehstarr miteinander verbundene, um eine Drehachse drehbare Federblätter auf einen dazwischen angeordneten Anschlag wirken und die Verbindungsachse zwischen ersten und zweiten Anlagebereichen in einem Winkel zur Drehachse angeordnet ist.

Es versteht sich, dass die Federelemente an der Primärseite bzw. der Anschlag an der Sekundärseite oder aber die Federelemente an der Sekundärseite bzw. der Anschlag an der Primärseite des Torsionsschwingungsdämpfers vorgesehen sein können, ohne dass das Wesen der Erfindung hiervon beeinflusst wird.

Eine Vielzahl an Ausführungsbeispielen zu erfindungsgemäßen Federelementen und deren Einsatz als Torsionsschwingungsdämpfer ist in der Zeichnung dargestellt und wird im folgenden näher erläutert.

Es zeigt
- Figur 1: schematisch einen Schnitt durch einen Torsionsschwingungsdämpfer mit einem erfindungsgemäßen Federelement,
- Figur 2: schematisch einen Schnitt durch einen Torsionsschwingungsdämpfer mit Federelement und Lagerung,
- Figur 3: schematisch einen Schnitt durch einen Torsionsschwingungsdämpfer mit Dämpfungstellerfeder,
- Figur 4: schematisch einen Schnitt durch einen Torsionsschwingungsdämpfer mit zwei Dämpfungstellerfedern,
- Figur 5: eine Abwicklung durch einen in den Figuren 1 bis 4 dargestellten Torsionsschwingungsdämpfer in der radialen Ebene der Wälzkörper,
- Figur 6: eine Darstellung der Abwicklung nach Figur 5 bei gegen das Federblatt verdrehten Anschlag,
- Figur 7: einen schematisch dargestellten Ausschnitt aus Figur 6 mit Darstellung der am Wälzkörper angreifenden Kräfte,
- Figur 8: eine schematische Ansicht eines in Ausnehmungen im Federblatt und im Anschlag geführten Wälzkörpers,
- Figur 9: eine schematische Ansicht auf ein Federblatt mit einem rautenartigen Durchbruch,
- Figur 10: schematisch einen Schnitt durch das in Figur 9 gezeigte Federblatt,
- Figur 11: eine schematische Darstellung einer alternativen Ausführungsform eines Federblattes mit einer gebogenen, länglich ausgebildeten Ausbuchtung,
- Figur 12: schematisch einen Schnitt durch das in Figur 11 gezeigte Federblatt,
- Figur 13: eine Ansicht des in Figur 12 gezeigten Schnittes mit einer Bohrung,
- Figur 14: eine Ansicht des in Figur 12 gezeigten Schnittes mit zwei Bohrungen,
- Figur 15: eine schematische Ansicht eines nicht erfindungsgemäßen Federelementes mit fliehkraftabhängiger Dämpfungseinrichtung,
- Figur 16: einen Schnitt durch das in Figur 15 gezeigte Federelement längs der Linie A-A,
- Figur 17: einen Schnitt durch das in Figur 15 gezeigte Federelement längs der Linie B-B,
- Figur 18: schematisch einen Schnitt durch einen nicht erfindungsgemäßen Torsionsschwingungsdämpfer mit radial außerhalb einer Lagerung von Primär- und Sekundärteilen angeordnetem in axialer Richtung wirkendem Federelement,
- Figur 19: schematisch einen Schnitt durch einen Torsionsschwingungsdämpfer gemäß Figur 18 mit spitzwinklig zur Achse wirkender Anlagekraft zwischen Federblatt und Wälzkörper,
- Figur 20: schematisch einen Schnitt durch einen Torsionsschwingungsdämpfer mit radial von der Lagerung weit außerhalb liegenden Wälzkörpern,
- Figur 21: schematisch einen Schnitt durch einen Torsionsschwingungsdämpfer mit radial etwas außerhalb der Lagerung angeordneten Wälzkörpern,
- Figur 22: schematisch einen Schnitt durch einen Torsionsschwingungsdämpfer mit radial innerhalb der Lagerung angeordneten Wälzkörpern,
- Figur 23: schematisch einen Schnitt durch einen Torsionsschwingungsdämpfer mit walzenförmigen Wälzkörpern,
- Figur 24: schematisch einen Schnitt durch einen Trilokwandler mit eingebautem nicht erfindungsgemäßem Federelement,
- Figur 25: schematisch einen Schnitt durch einen Trilokwandler gemäß Figur 24 mit zusätzlichem Anschlag,
- Figur 26: schematisch einen Schnitt durch einen nicht erfindungsgemäßen Torsionsschwingungsdämpfer mit auf zwei unterschiedlichen Radien angeordneten Wälzkörpern,
- Figur 27: schematisch einen Schnitt durch einen nicht erfindungsgemäßen Torsionsschwingungsdämpfer mit zwei drehstarr miteinander verbundenen Federelementen, die über Wälzkörper mit einem Anschlag zusammenwirken,
- Figur 28: schematisch einen Schnitt durch einen nicht erfindungsgemäßen Torsionsschwingungsdämpfer mit gegeneinander wirkenden Tellerfedern,
- Figur 29: schematisch einen Schnitt durch einen nicht erfindungsgemäßen Torsionsschwingungsdämpfer mit auf Kugeln gelagerten Scheiben,
- Figur 30: schematisch einen nicht erfindungsgemäßen Torsionsschwingungsdämpfer mit Gleit- bzw. Nadellager,
- Figur 31: einen Schnitt durch den in Figur 30 gezeigten Torsionsschwingungsdämpfer,
- Figur 32: einen Schnitt durch eine alternative Ausführungsform eines nicht erfindungsgemäßen Torsionsschwingungsdämpfers
- Figur 33: eine Ansicht einer Scheibe mit s-förmig gebogenen Kugelbahnen,
- Figur 34: einen Ausschnitt aus Figur 33,
- Figur 35: eine Scheibe mit bogenförmigen Kugelbahnen,
- Figur 36: eine Scheibe mit geradlinigen Kugelbahnen,
- Figur 37: einen Schnitt durch einen nicht erfindungsgemäßen Torsionsschwingungsdämpfer mit gefedertem Verdrehwinkelanschlag,
- Figur 38: einen Schnitt durch den in Figur 37 gezeigten Torsionsschwingungsdämpfer,
- Figur 39: einen Schnitt durch einen nicht erfindungsgemäßen Torsionsschwingungsdämpfer mit einer von einem Stift geführten Feder,
- Figur 40: eine Ansicht der in Figur 39 gezeigten Scheibe,
- Figur 41: schematisch einen Schnitt durch einen nicht erfindungsgemäßen Torsionsschwingungsdämpfer mit einer vorgespannten Feder,
- Figur 42: schematisch einen Schnitt durch einen nicht erfindungsgemäßen Torsionsschwingungsdämpfer mit einer mittels einer tangential Blattfeder vorgespannten Feder,
- Figur 43: eine Ansicht der in Figur 42 gezeigten Federscheibe,
- Figur 44: schematisch einen Schnitt durch einen nicht erfindungsgemäßen Torsionsschwingungsdämpfer mit in die Scheibe integriertem Federelement und

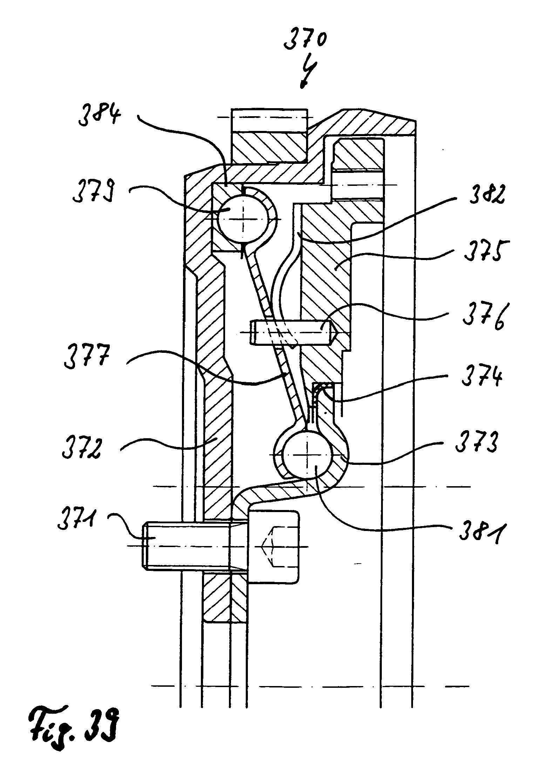

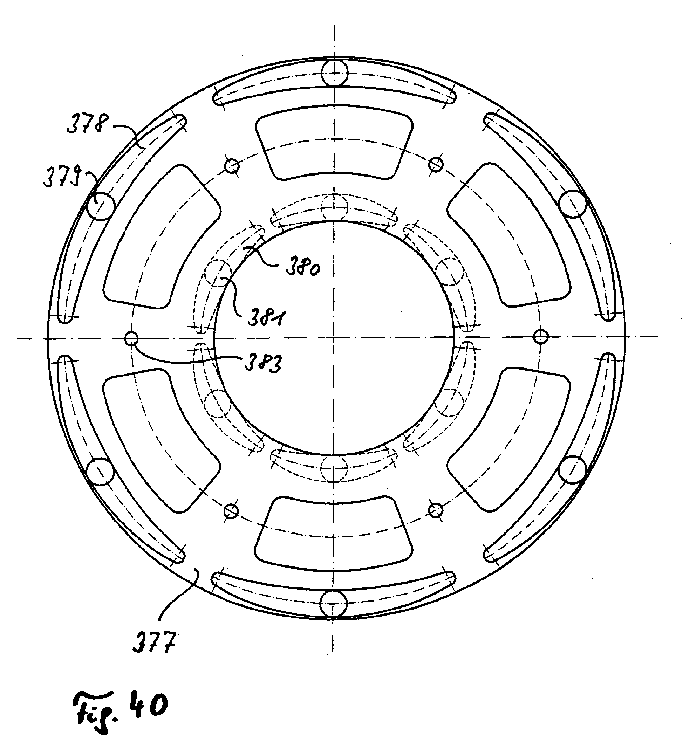

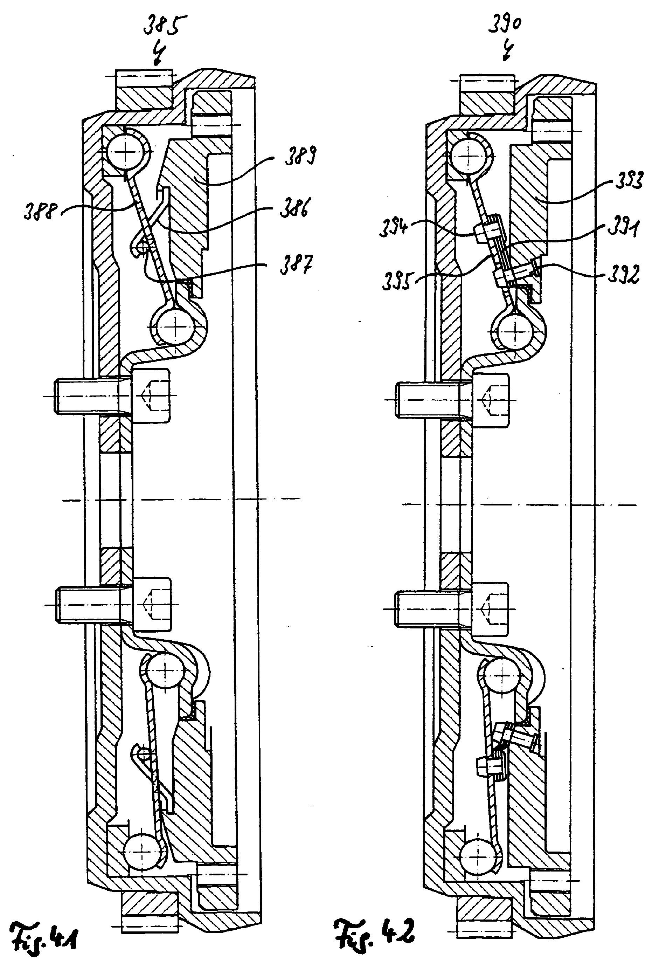

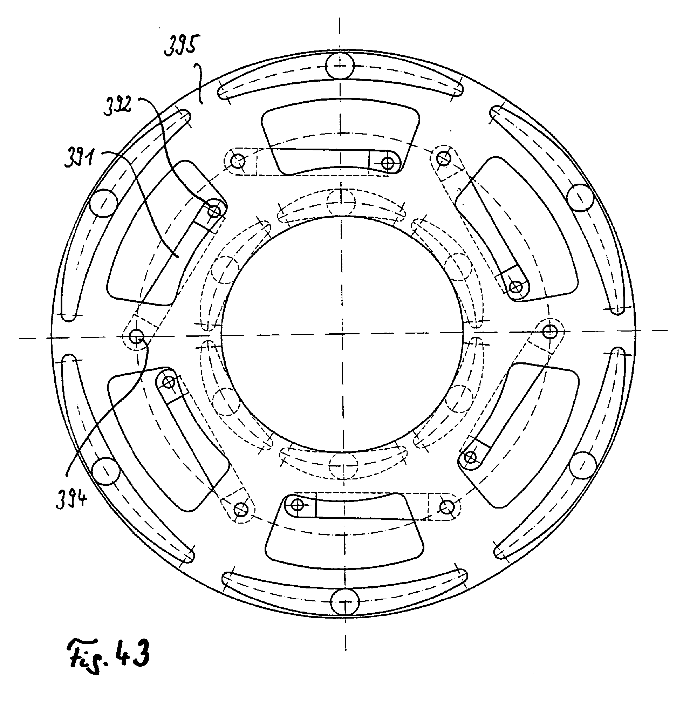

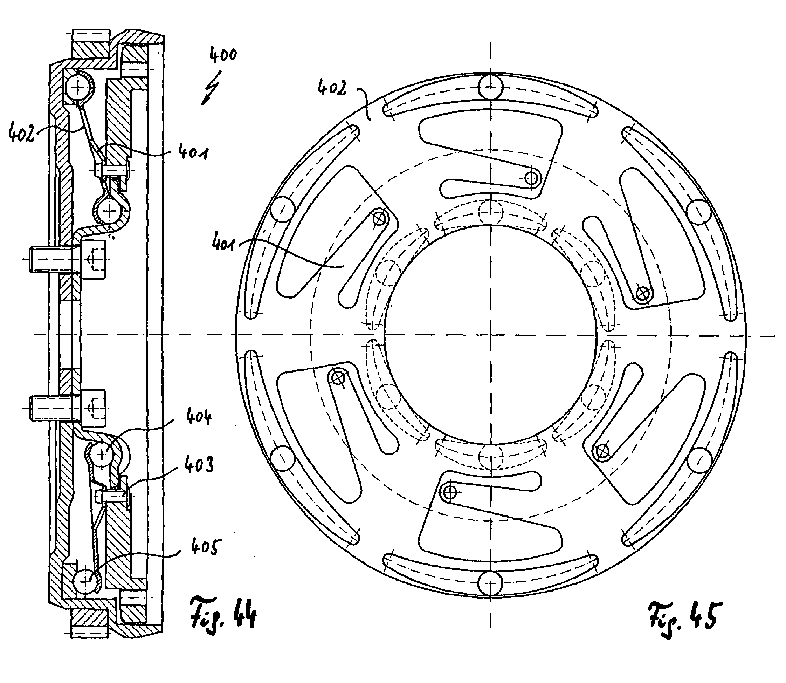

- Figur 45: eine Ansicht der in Figur 44 gezeigten Federscheibe.

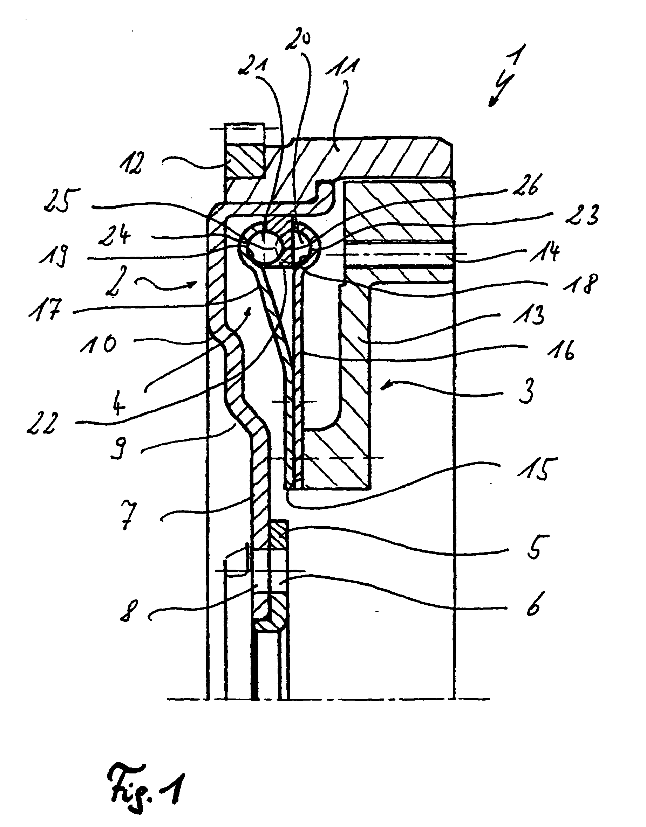

Der in Figur 1 gezeigte Torsionsschwingungsdämpfer 1 besteht aus einem Primärteil 2, einem Sekundärteil 3 und einem dazwischen angeordnetem Federelement 4. Das Federelement 4 ist derart zwischen dem Primärteil 2 und dem Sekundärteil 3 angeordnet, dass eine auf das Primärteil aufgebrachte rotatorische Kraft über das Federelement 4 auf das Sekundärteil 3 übertagen werden kann.

Das Primärteil 2 besteht aus einem L-förmigen Flanschteil 5, das mit einer zentralen Achse verbindbar ist. In diesem L-förmigen Flanschteil 5 sind Bohrungen 6 vorgesehen, über die das Flanschteil mit einem scheibenförmigen Bauteil 7 verbindbar ist. Hierzu hat das scheibenförmige Bauteil 7 an einem radial innenliegenden Ende Bohrungen 8, die mit den Bohrungen 6 fluchten. In radialer Erstreckung hat das scheibenartige Bauteil 7 zwei axiale Abstufungen 9 und 10 und das radial äußerste Ende des scheibenartigen Bauteils 7 ist entgegengesetzt zu den Abstufungen zunächst in eine zur Drehachse parallele Rich-tung gebogen und verläuft dann wieder ein kurzes Stück radial nach außen. Im Bereich der äußersten Erstreckung des scheibenartigen Bauteils 7 ist eine Zusatzmasse 11 am scheibenartigen Bauteil 7 befestigt. An dieser Zusatzmasse 11 ist schließlich der Anlasserzahnkranz 12 angebracht.

Radial innerhalb der Zusatzmasse 11 und axial zum scheibenförmigen Bauteil 7 versetzt ist ein im Schnitt Z-förmiges scheibenartiges Bauteil 13 als Sekundärteil 3 vorgesehen. Dieses Z-förmige Bauteil 13 hat in seinem radial außen liegenden Bereich eine Bohrung 14 zur Verbindung des Sekundärteils 3 mit einer Kupplungseinrichtung (nicht gezeigt). Am radial inneren Ende des Z-förmigen Bauteils 13 ist an einer sich radial erstreckenden dem scheibenförmigen Bauteil 7 gegenüberliegenden Seite 15 das Federelement 4 befestigt.

Das Federelement 4 besteht aus zwei in axialer Richtung nebeneinanderliegenden Federblättern, die als Tellerfedern 16, 17 ausgebildet sind. Das radial innenliegende Ende dieser Tellerfedern 16, 17 ist miteinander und mit dem Sekundärteil 3 verbunden. Das radial äußere Ende der Tellerfedern 16, 17 weist jeweils eine umlaufende Rinne 18, 19 auf, die als Führung für kugelförmige Wälzkörper 20, 21 dient. Die Rinnen 18, 19 sind zueinander geöffnet und die Federblätter 16, 17 drücken die Wälzkörper 20, 21 gegen einen dazwischen angeordneten Anschlag 22.

Der Anschlag 22 ist flanschartig im äußeren Bereich des scheibenförmigen Teiles 7 am Primärteil befestigt und erstreckt sich von dort radial nach innen.

Das zwischen Primärteil 2 und Sekundärteil 3 angeordnete Federelement 4 hat somit einen ersten Anlagebereich 23, 24 zwischen den Federblättern 16, 17 und den Wälzkörpern 20, 21 und einen zweiten Anlagebereich 25, 26, in dem die Wälzkörper 20, 21 mit dem Anschlag 22 zusammenwirken.

Der Anlagebereich 25, 26 am Anschlag 22 ist als Führung ausgebildet. Im vorliegenden Fall dient eine in Umfangsrichtung begrenzte Rinne im Anschlag 22 der Führung der kugelförmigen Wälzkörper 20 bzw. 21.

Die beschriebenen Führungen der Wälzkörper 20 bzw. 21 haben bei dem beschriebenen Ausführungsbeispiel eine Lagerfunktion, die es ermöglicht, das Sekundärteil 3 am Primärteil 2 zu lagern und auf eine Lagerung des Sekundärteils auf einer zentralen Achse oder einem Flanschstück vollständig zu verzichten.

Die Figur 2 zeigt, dass zusätzlich zur Lagerung im Bereich der Wälzkörper eine weitere Lagerung zwischen Primärteil und Sekundärteil vorgesehen werden kann. Bei dem in Figur 2 dargestellten Torsionsschwingungsdämpfer 30 ist daher zwischen dem Primärteil 31 und dem Sekundärteil 32 ein Lager 33 vorgesehen. Hierzu ist am scheibenförmigen Bauteil 34 des Primärteils 31 ein Z-förmiges Bauteil 35 befestigt. Dieses Z-förmige Bauteil 35 hat eine zur Drehachse 36 konzentrische Umfangsfläche 37, an der eine L-förmige Lagerschale 38 anliegt. Diese L-förmige Lagerschale 38 hat einen sich axial erstreckenden Teil 39, der zwischen dem Z-förmigen Bauteil 35 und dem Sekundärteil 33 angeordnet ist. Ein sich radial erstreckender Teil 40 der L-förmigen Lagerschale 38 liegt zwischen dem scheibenförmigen Bauteil 34 und dem Federelement 41. Die Lagerschale bildet somit ein axial und radial wirkendes Gleitlager zwischen dem Primärteil 31 und dem Sekundärteil 32.

Bei dem in Figur 2 gezeigten Torsionsschwingungsdämpfer 30 sind beide Tellerfedern 42 und 43 des Federelementes 41 derart gebogen, dass sie in einem radial innenliegenden Bereich aneinander anliegen und in einem radial äußeren Bereich V-förmig divergieren. Der Anschlag 44 fluchtet bei diesem Ausführungsbeispiel mit den Bereich der Tellerfedern, in dem sie plan aneinander anliegen. Dies hat zunächst zur Folge, dass beide Tellerfedern 42 und 43 mit der gleichen Kraft auf den Anschlag 44 wirken. Die in der Figur 2 an der Tellerfeder 43 eingezeichnete Sicke 45 zeigt jedoch, wie diese Anlagekraft auf einfache Art und Weise variiert werden kann. Verständlicherweise können auch in der anderen Feder 42 eine oder mehrere Sicken angebracht werden oder es kann die Stärke der Feder bereichsweise reduziert werden, um die Federcharakteristik zu beeinflussen. Eine sich radial vom äußeren Rand des scheibenförmigen Bauteils 34 nach innen erstreckende Scheibe 46 dient als Dichtung gegen das Eindringen von Staub von der Kupplung zum Bereich der Wälzkörper und erleichtert es, gegebenenfalls ein Schmiermittel im Bereich der Wälzkörper zu halten.

Die Figur 3 zeigt einen Torsionsschwingungsdämpfer 50, bei dem zwischen dem Primärteil 51 und dem Federelement 52 eine Dämpfungseinrichtung 53 angeordnet ist. Diese Dämpfungseinrichtung 53 besteht aus einer Tellerfeder 54, deren radial innenliegendes Ende am Primärteil 51 befestigt ist und deren radial außenliegendes Ende einen Reibbelag 55 aufweist, der durch die Tellerfeder 54 gegen das Federelement 52 gedrückt wird. Anstelle einer Tellerfeder kann hierfür eine Spinnenfeder wegen ihrer günstigeren Federcharakteristik verwendet werden.

Außerdem ist bei dem Torsionsschwingungsdämpfer 50 eine im Querschnitt U-förmige Lagerschale 56 vorgesehen, zwischen deren Schenkel das radial innenliegende Ende des Federelementes 52 und das radial innenliegende Ende des Sekundärteils 57 liegt. Die Außenseite der beiden Schenkel der U-förmigen Lagerschale 56 grenzen an das scheibenförmige Bauteil 58 des Primärteils 51 und einen Halteflansch 59 an. Das Federelement 52 wird somit in beiden axialen Richtungen zusammen mit dem Sekundärteil 57 in einer definierten Position relativ zum Primärteil 51 gehalten.

Sowohl die dargestellte Dämpfungseinrichtung 53 als auch die U-förmige Lagerschale 56 sind unabhängig voneinander auch für andere Ausführungsvarianten von Torsionsschwingungsdämpfern einsetzbar.

Bei dem in Figur 3 dargestellten Torsionsschwingungsdämpfer 50 ist die Führung der Wälzkörper 60, 61 derart ausgebildet, dass die Wälzkörper bei höheren Drehzahlen am Torsionsschwingungsdämpfer unter Einfluss der Zentrifugalkraft innerhalb der Führung innerhalb eines definierten Bereiches nach außen wandern können. Hierzu ist sowohl an den Federn 62, 63 als auch am Anschlag 64 die Führungsrinne mit einer speziellen Kurvenform versehen, die dafür sorgt, dass je nach Drehzahl die Wälzkörper 60 und 61 in unterschiedlichen radialen Abständen zur Drehachse 65 geführt werden.

Durch die drehzahlabhängige Variation der Führungsbahn der Wälzkörper ist auch eine drehzahlabhängig unterschiedliche axiale Auslenkung der Federblätter 62 und 63 zu erzielen. Dies führt dazu, dass die Kraft zwischen der Reibeinrichtung 53 und dem Federblatt 63 drehzahlabhängig variiert wird.

Die Ausbildung der Führungsbahnen der Wälzkörper erlaubt somit eine Einflussnahme auf verschiedenste Kennlinien des Torsionsschwingungsdämpfers und somit eine Einflussnahme auf unterschiedliche Wirkcharakteristika.

Ein weiteres Beispiel eines Torsionsschwingungsdämpfers 70 ist in Figur 4 gezeigt. Dieser Torsionsschwingungsdämpfer ist im wesentlichen ähnlich dem in Figur 2 gezeigten Torsionsschwingungsdämpfer 30 aufgebaut. Als Dämpfungsmittel sind bei diesem Torsionsschwingungsdämpfer 70 zwei Tellerfedern 71 und 72 vorgesehen, die konzentrisch zur Drehachse 73 des Torsionsschwingungsdämpfers 70 angeordnet sind und auf eine Reibscheibe 74 wirken. Diese Reibscheibe 74 wirkt im dargestellten Ausführungsbeispiel in axialer Richtung auf das Federblatt 75, um eine Dämpfung zu erzielen. Die Wirkrichtung der Reibscheibe 74 auf das Federblatt 75 des Federelementes 76 ist durch die Ausbildung der Anlagefläche zwischen Reibscheibe 74 und Federelement 76 variierbar und auch eine oben beschriebene drehmomentabhängige Führung des Wälzkörpers kann zu einer Variation der Dämpfungscharakteristiken führen.

Anstelle der konzentrischen Tellerfedern 71 und 72 können auch mehrere auf einer Kreislinie angeordnete Federn für einen Druck der Reibscheibe 74 auf das Federelement 76 sorgen.

Der bisher beschriebene Aufbau der in den Figuren 1 bis 4 gezeigten Torsionsschwingungsdämpfer zeigt nur eine spezielle Wälzlagerung zwischen Primär- und Sekundärteil und das Zusammenwirken dieser Lagerung mit einer Dämpfungseinrichtung. Es kann vorteilhaft sein, wenn bei einer Relativbewegung zwischen Primär- und Sekundärteil das Federblatt gebogen wird. Dies kann durch Rampen bewirkt werden, die bei einem Verdrehen des Primärteils relativ zum Sekundärteil ein Verbiegen des Federelementes oder eines Federblattes bewirken.

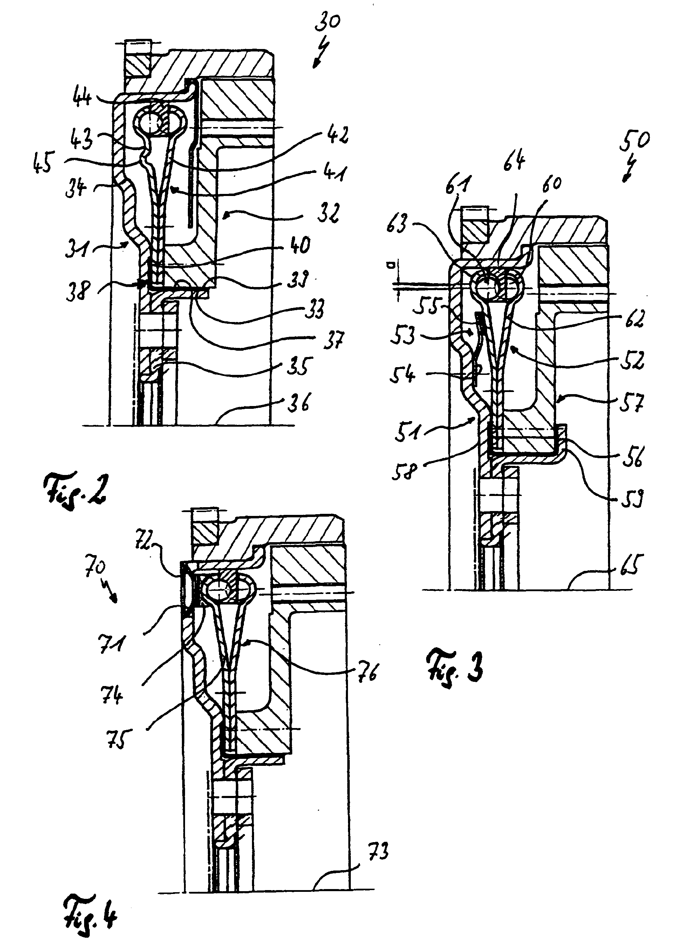

Die Figuren 5 und 6 zeigen, wie durch eine geeignete Ausbildung der Anlagebereiche zwischen Federblatt und Wälzkörper bzw. Wälzkörper und Anschlag ein verdrehwinkelabhängiges Auseinanderdrücken der Federblätter 16 und 17 erzielt werden kann. Der Wälzkörper 20 ist zwischen dem ersten Anlagebereich 23 des Federblattes 16 und dem zweiten Anlagebereich 25 des Anschlags 22 eingeklemmt. Hierbei kann je nach Ausführungsform eine beliebige Vorspannung eingestellt werden.

Entsprechend ist der Wälzkörper 21 zwischen dem ersten Anlagebereich 24 des Federblattes 17 und dem zweiten Anlagebereich 26 des Anschlags 22 angeordnet.

Sowie ein Drehmoment zwischen dem Primärteil und dem Sekundärteil wirkt, führt dies dazu, dass sich die Federblätter 16 und 17 relativ zum Anschlag 22 verschieben und die Wälzkörper infolge der kurvenförmig ausgebildeten Anlagebereiche die Federblätter 16 und 17 auseinander drücken. In den Figuren 5 und 6 sind die Kurvenbahnen des ersten und des zweiten Anlagebereichs so ausgebildet, dass sowohl bei einer Verdrehung zwischen den Federblättern 16, 17 und dem Anschlag 22 in einer Richtung als auch bei einer Verdrehung in der entgegengesetzten Richtung ein Auseinanderdrücken der Federblätter 16 und 17 bewirkt wird.

Die dabei am Wälzkörper 21 auftretenden Kräfte sind in Figur 7 schematisch dargestellt. Die zwischen dem Anschlag 22 und dem Federblatt 17 wirkende Kraft F hat eine in Umfangsrichtung wirkende Kraftkomponente F_{Umfang} und eine in axialer Richtung wirkende Kraftkomponente Fₐₓᵢₐₗ. Die Kräfte bewirken daher eine Rückstellkraft, die das Federelement in die in Figur 5 gezeigte Nullstellung rückt.

In den Figuren 5 und 6 ist gezeigt, wie durch eine spezielle Ausformung der Federelemente 16 und 17 in Umfangsrichtung und eine in Umfangsrichtung variierende Stärke des Anschlags eine spezielle Führungsbahn für die Wälzkörper 20, 21 erzeugt werden kann. Verständlicherweise kann auch durch eine in Umfangsrichtung variierende Stärke der Federelemente 16 und 17 sowie eine spezielle Ausformung des Anschlages eine Führungsbahn für die Wälzkörper 20, 21 erzeugt werden.

Die Figuren 8 bis 10 zeigen im Gegensatz hierzu, dass auch durch einen speziellen Durchbruch im Federblatt eine entsprechende Kurvenbahn erzeugt werden kann. Bei dem in Figur 8 gezeigten Ausführungsbeispiel 80 ist sowohl im Anschlag 81 als auch im Federblatt 82 eine Ausnehmung vorgesehen, in die sich der Wälzkörper 83 hineinerstreckt. In Umfangsrichtung versetzt erstreckt sich auf der anderen Seite des Anschlags 81 der Wälzkörper 84 in eine Ausnehmung im Anschlag 81 und eine weitere Ausnehmung im Federblatt 85.

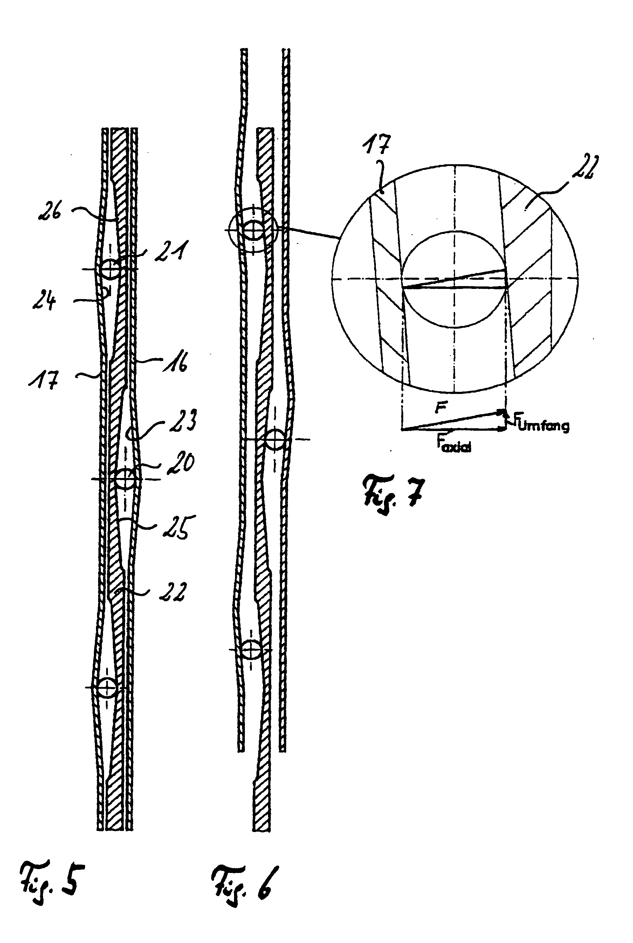

Ein Beispiel einer derartigen Ausnehmung 86 ist in Figur 9 am Federblatt 82 dargestellt. Die Zusammenschau aus den Figuren 9 und 10 zeigt, dass die etwa rautenförmige Ausnehmung 86 einer in Umfangsrichtung gebogenen Raute entspricht. Der maximale Querschnitt der Öffnung ist jedoch kleiner als der Querschnitt des Wälzkörpers 83, so dass der Wälzkörper 83 von den Rändern der Ausnehmung 86 geführt wird. Dies führt dazu, dass bei einer Relativbewegung wegung zwischen Federblatt 82 und Anschlag 81 der Wälzkörper 83 in den spitzwinklig auslaufenden Bereich des Durchbruchs 86 bewegt wird und dabei den Anschlag 81 und das Federblatt 82 auseinander drückt.

Eine ähnliche Funktion ist durch die in den Figuren 11 bis 14 gezeigte rinnenförmige Führung 90 zu erzielen. Hierbei erstreckt sich am Federblatt 91 eine in Umfangsrichtung gebogene Rinne, die in der Draufsicht die Form eines gebogenen Langloches aufweist. Diese Rinne 90 hat eine konkave Form, die auf den Radius eines Wälzkörpers 92 abgestimmt ist. Die Tiefe der Rinne ist in den Randbereichen 93 und 94 geringer als im mittleren Bereich 95, um im Randbereich ein Auseinanderbewegen von Federblatt und Anschlag zu bewirken. Im mittleren Bereich 95 ist die Tiefe der Rinne über einen definierten Umfangswinkelbereich konstant, damit das System erst bei Überschreitung eines speziellen Umfangswinkels eine erhöhte Kraft auf das Federblatt 91 ausübt.

Statt der rinnenförmigen Führung 90 bzw. der länglichen Ausbuchtung 90 kann auch ein entsprechendes Langloch vorgesehen sein.

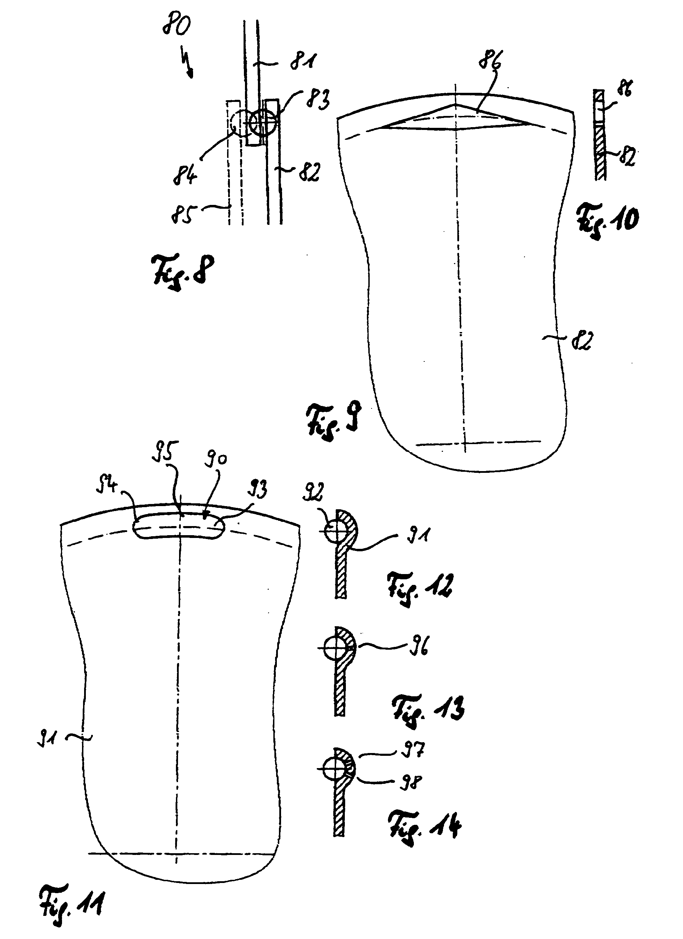

Schmutzteilchen, die in den Anlagebereich zwischen dem Federblatt 91 und den Wälzkörpern 92 bzw. in den Anlagebereich zwischen den Wälzkörpern 92 und den Anschlag (nicht gezeigt) eindringen, können durch die in Figur 13 gezeigte Öffnung 96 bzw. die in Figur 14 gezeigten Öffnungen 97 und 98 den Anlagebereich verlassen.

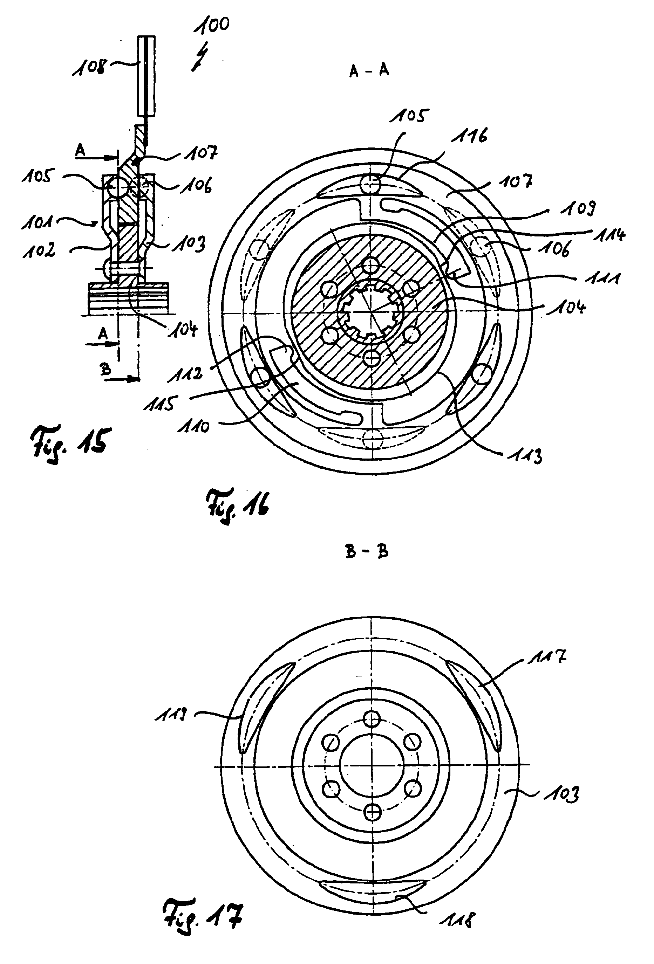

Die Figuren 15, 16 und 17 zeigen einen nicht erfindungsgemäßen Torsionsschwingungsdämpfer 100 mit einer drehzahlabhängigen Dämpfungseinrichtung.

Die Sekundärseite 101 ist mit einer Welle verbindbar und weist zwei sich gegenüberliegende scheibenartige Bauteile 102 und 103 auf, die mit einem dazwischenliegenden Flanschteil 104 vernietet sind. In ihrem radial außenliegenden Bereich weisen die scheibenförmigen Bauteile 102 und 103 Führungen für Wälzkörper 105 und 106 auf. Diese Führungen drücken die Wälzkörper gegen einen Anschlag 107, der als Primärteil des Torsionsschwingungsdämpfers 100 wirkt. Dieser Anschlag 107 steht mit einer Kupplungseinrichtung 108 in Verbindung.

Durch eine spezielle Form von Führungen 116 im Anschlag 107 werden bei einer Relativbewegung zwischen Primärteil 101 und Sekundärteil 107 die Wälzkörper 105 und 106 in entgegengesetzte axiale Richtungen gedrängt und dadurch die als Federn dienenden scheibenartigen Bauteile 102 und 103 auseinandergedrückt. Die dadurch entstehenden Kräfte sind durch die Wahl der Führungen zwischen den Wälzkörpern 105, 106 und dem Anschlag 107 bzw. den Wälzkörpern 105, 106 und den scheibenförmigen Bauteilen 102 und 103 beliebig einstellbar.

In radialer Richtung zwischen dem Anschlag 107 und dem flanschartigen Teil 104 sind sich im Umfangsrichtung erstreckende Arme 109 und 110 angeordnet, deren sich in radialer Richtung nach innen erstreckende Nasen 111 bzw. 112 mit der Umfangskontur 113 des flanschartigen Teils 104 zusammenwirken können. Die Umfangskontur 113 des flanschartigen Teils 104 hat abgeflachte Bereiche 114, 115 in denen die Nasen 111 und 112 das flanschartige Teil 104 nicht berühren, so dass ein begrenzter Freiwinkel entsteht. In den übrigen Bereichen reiben die Nasen 111 und 112 an der Umfangskontur 113 und bewirken somit eine Dämpfung zwischen Primärteil 101 und Sekundärteil 107.

Durch die Wahl des Radius der Umfangskontur 113 kann auf die Reibungscharakteristik Einfluss genommen werden.

Es ist leicht ersichtlich, dass bei größeren Drehzahlen des Sekundärteils 107 eine Zentrifugalkraft auf die Arme 109 und 110 wirkt, die die Reibung an der Umfangskontur 113 verringert oder sogar eliminiert.

Die in einem gleichschenkligen Dreieck angeordneten Führungskonturen 116 am Anschlag 107 entsprechen im vorliegenden Fall den Führungskonturen 117, 118, 119 an den scheibenförmigen Teilen 102 und 103. Dadurch, dass die Führungskonturen sich am ersten und zweiten Anlagebereich entsprechen, können die kugelförmigen Wälzkörper 105, 106 ohne Schlupf abrollen.

Es ist jedoch auch möglich, unterschiedliche Führungskonturen an erstem und zweitem Anlagebereich vorzusehen, um die Kennlinien des Federsystems zu modifizieren.

Die Figuren 18 bis 21 zeigen nicht erfindungsgemäße Torsionsschwingungsdämpfer 120, 130, 140 und 150, bei denen die Wälzkörper in unterschiedlichem radialen Abstand zur Drehachse 121, 131, 141, 151 angeordnet sind.

In Figur 18 ist radial etwa mittig in einem Raum 122 zwischen dem Primärteil 123 und dem Sekundärteil 124 das Federelement 125 angeordnet. Zwei auf den Wälzkörper 126 wirkende Tellerfedern 127 und 128 erzeugen somit eine Axialkraft, die in axialer Richtung auf den Wälzkörper 126 drückt und mit gleicher Kraft gegen die axiale Lagerung. Dadurch wird an der axialen Lagerung eine Reibung definiert.

Bei dem in Figur 19 gezeigten Ausführungsbeispiel ist die Wirkachse der auf den Wälzkörper 136 einwirkenden Kräfte spitzwinklig zur Drehachse 131 und dies wird durch die abgewinkelte Form der Tellerfedern 137 und 138 erreicht. Die Figur zeigt, dass die auf den Wälzkörper 136 wirkenden Kräfte im Extremfall sogar auf einer radialen Linie liegen können. Dies führt zu einer Verringerung der in axialer Richtung zwischen Primärteil 133 und Sekundärteil 134 wirkenden Kräfte. Die dadurch entstehenden radialen Kraftkomponenten heben sich aufgrund der konzentrischen Anordnung der Wälzkörper 136 gegeneinander auf und die in axialer Richtung liegende Komponente definiert die Reibung am Axiallager.

Der in Figur 20 gezeigte Torsionsschwingungsdämpfer 140 hat ein an der Primärseite 143 befestigtes Tellerfederblatt 148 mit extrem kurzer radialer Erstreckung und an der Sekundärseite 144 eine Tellerfeder 147 mit einer relativ großen radialen Erstreckung. Dadurch wird der größte Anteil der Federung vom sekundärseitig befestigten Federblatt 147 übernommen.

Die umgekehrte Situation ist in Figur 21 am Torsionsschwingungsdämpfer 150 dargestellt. Hierbei ist das an der Sekundärseite 154 angebrachte Federblatt 157 fast starr ausgebildet und die Federfunktion wird im wesentlichen von dem an der Primärseite 153 befestigten Federblatt 158 übernommen.

In allen vier Ausführungsbeispielen sorgt eine L-förmige Lagerschale 129, 139, 149, 159 für die Lagerung des Primärteils relativ zum Sekundärteil.

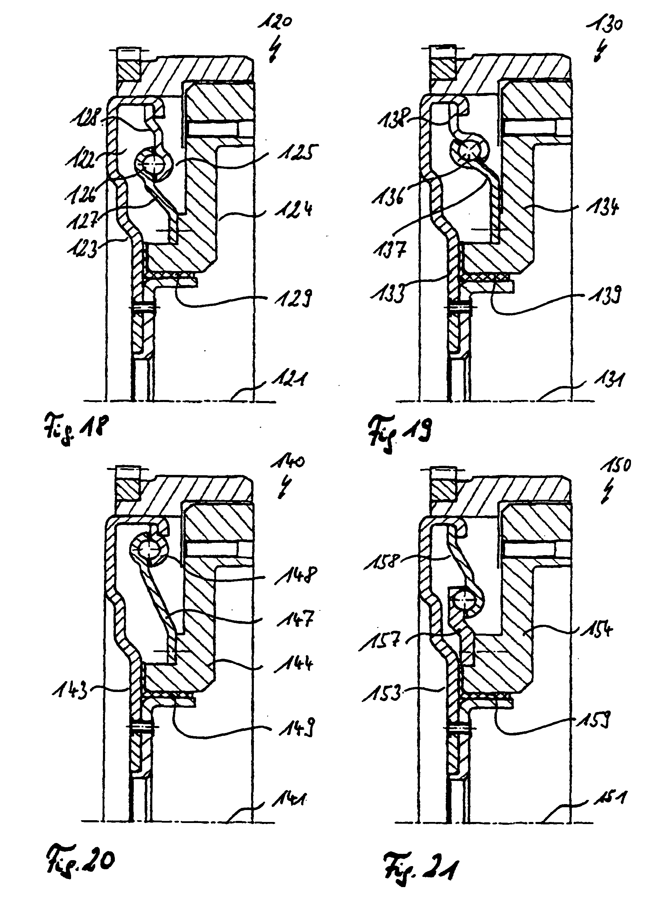

Die Figur 22 zeigt einen Torsionsschwingungsdämpfer 160 mit einer L-förmigen Lagerschale 169 als Lagerung zwischen dem Primärteil 163 und dem Sekundärteil 164. Bei diesem Ausführungsbeispiel ist radial innerhalb der Lagerschale 169 das Federelement 165 angeordnet. Zwei Blattfedern 167 und 168 wirken hierbei auf Wälzkörper 166, die mit einem flanschartigen Teil 170 am Sekundärteil 164 zusammenwirken. Dadurch entsteht ein Freiraum 171 radial außerhalb der L-förmigen Lagerschale 169 zwischen dem Primärteil 163 und dem Sekundärteil 164, in dem beispielsweise eine Dämpfungseinrichtung oder ein weiteres Federelement angeordnet werden können.

Eine Ausführungsform eines Torsionsschwingungsdämpfers 180 mit zylinderförmigen Wälzkörpern 186 ist in Figur 23 dargestellt. Die zylindrischen oder kegelförmigen Wälzkörper 186 laufen in nutartigen Führungen 191, die in Umfangsrichtung an einer Seitenfläche eines Anschlags 190 angeordnet sind. Hierbei werden versetzt zueinander jeweils von einer Seite Wälzkörper 186, 192 durch die Federblätter 187, 188 an den Anschlag 190 gedrückt. Die Federblätter 187 und 188 sind an ihrem radial inneren Ende miteinander und mit dem Sekundärteil 184 verbunden. Der Anschlag 190 ist mit dem Primärteil 183 verbunden, das auf der Antriebswelle (nicht gezeigt) sitzt. Eine Reibeinrichtung 193 wirkt zwischen dem Primärteil 183 und dem Federblatt 187. Diese Reibeinrichtung 193 besteht aus einer konzentrisch zur Drehachse 181 angeordneten Tellerfeder 194 und einem Reibbelag 195, der durch die Tellerfeder 194 gegen das Federblatt 187 gepresst wird.

In Figur 24 ist ein an sich bekannter Trilokwandler 200 dargestellt. Hierbei wird die Kraft der Motorwelle auf das Gehäuse 201 übertragen und durch die hydraulische Schaufelanordnung über die Gegenschaufel 202 auf eine Antriebswelle. Bei geschlossenem Lockup des Trilokwandlers wirkt ein ausreichender Druck auf ein scheibenförmiges, mittels eines Kolbenteils 203 gelagertes Bauteil 204, so dass das Bauteil 204 auf einen Reibbelag 205 am Gehäuse 201 gepresst wird. Das scheibenartige Bauteil 204 ist dann über den Reibbelag 205 mit der Primärseite verbunden. Insofern ist bei diesem Ausführungsbeispiel, anders als bei den übrigen Ausführungsbeispielen, der Anschlag an der Sekundärseite und die Federelemente an der Primärseite wirksam vorgesehen.

Am scheibenförmigen Bauteil 204 ist ein Federblatt 206 befestigt, das an seinem radial äußeren Ende eine Führung für einen kugelförmigen Wälzkörper 207 aufweist. Dieser Wälzkörper 207 wird durch das Federblatt 206 gegen den Anschlag 208 gedrückt und auf der gegenüberliegenden Seite des Anschlags 208 wird ein kugelförmiger Wälzkörper 209 zwischen dem scheibenförmigen Bauteil 204 und dem Anschlag 208 gehalten. Damit die Wälzkörper 207 und 209 von zwei Seiten klammerartig gegen den Anschlag 208 gedrückt werden können, ist im Anschlag ein Fenster 210 vorgesehen, durch das sich das Federblatt 206 erstreckt. Das Fenster 210 erlaubt eine begrenzte Drehbewegung zwischen einerseits scheibenförmigem Bauteil 204 und Federblatt 206 und andererseits dem Anschlag 208. Diese Drehbewegung führt infolge der Ausbildung der Führungen für die Wälzkörper 207 und 209 zu einem Auseinanderbewegen von scheibenförmigem Bauteil 204 und Federblatt 206. Die Wälzkörper 207 und 209 sind beispielsweise wie in den Figuren 5 und 6 gezeigt gehalten, und dies führt bei einer Verdrehung des Anschlags 208 relativ zum Federblatt 206 und zum scheibenartigen Bauteil 204 zu einer gegenläufigen Axialbewegung der letztgenannten Bauteile.

Die Anpresskraft des gesamten Federsystems an das Gehäuse des Trilokwandlers kann wie bei dem in Figur 25 gezeigten Trilokwandler 220 durch eine zusätzliche Tellerfeder 221 oder ein Anschlag verstärkt werden. Bei einer Verdrehung des Federblattes 226 und des scheibenartigen Bauteils 224 relativ zum Anschlag 228 wird die gesamte Federanordnung in Figur 25 nach links gegen den Reibbelag 225 und nach rechts gegen die Tellerfeder 221 gedrückt. Dies bewirkt, dass ab einem bestimmten Verdrehwinkel, das heißt ab einer bestimmten Auslenkung des Federblattes 226, die Tellerfeder 221 die Federanordnung gegen den Reibbelag 225 presst. Diese Bewegung der Bauteile 224 und 226 führt dazu, dass das scheibenartige Bauteil 224 stärker gegen den Reibbelag 225 gepresst wird, so dass gegenüber dem Stand der Technik nur ein geringerer Hydraulikdruck zum Schließen des Trilokwandlers ausreicht.

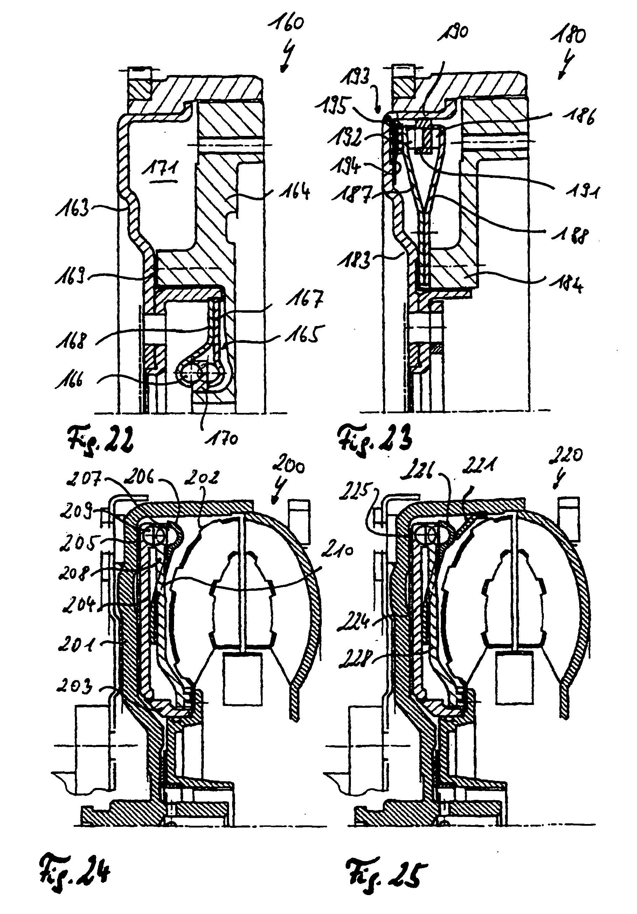

Die Figur 26 zeigt letztlich noch eine weitere Möglichkeit der Anordnung eines nicht erfindungsgemäßen Federelementes in einem Torsionsschwingungsdämpfer. Dieser Aufbau zeichnet sich durch eine besonders kleine axiale Ausdehnung des Federdämpfers aus.

Der in Figur 26 gezeigte Torsionsschwingungsdämpfer 240 hat primärseitig ein im wesentlichen Z-förmiges Flanschteil 241, an dessen radial außenliegender Seitenfläche eine Führung 242 für Wälzkörper 243 vorgesehen ist. Mit dem Z-förmigen Bauteil 241 ist ein scheibenförmiges Bauteil 244 mittels eines in der Bohrung 245 angebrachten Bolzens (nicht gezeigt) verbunden. Dieses scheibenförmige Bauteil 244 hat eine größere radiale Erstreckung als das Z-förmige Bauteil 241 und besitzt an seinem radial äußeren Ende ebenfalls eine Führung 246 für einen Wälzkörper 247.

Die Führungen 246 und 242 für die Wälzkörper 243 und 247 haben gegensätzlich konkave Ausformungen, um die Wälzkörper zu halten. Der Wälzkörper 247 wird auf der der Führung 246 gegenüberliegenden Seite durch ein Federblatt 248 gehalten und der Wälzkörper 243 wird auf der der Führung 242 gegenüberliegenden Seite durch die Haltefeder 249 gehalten. Das Federblatt 248 und die Haltefeder 249 sind miteinander verbunden und an einem scheibenartigen Bauteil 250 befestigt, das als Sekundärteil dient.

Das scheibenförmige Bauteil 250 ist über eine L-förmige Lagerschale 251 axial und radial auf dem Z-förmigen Teil 241 gelagert. Das Lager befindet sich somit in unmittelbarer Nähe der Führung 242 und die Wälzkörper 243 und 247 sind radial innerhalb bzw. radial außerhalb der radialen Lagerung zwischen Primärteil und Sekundärteil angeordnet.

Die Führungen 242 und 246 sowie die an den gegenüberliegenden Federn 248 und 249 vorgesehenen Führungen sind, wie in den Figuren 5 und 6 dargestellt, ausgebildet, so dass bei einer Verdrehung des Primärteils gegen das Sekundärteil eine Biegekraft auf die Haltefeder 249 und insbesondere auf das Federblatt 248 wirkt.

Die in den Figuren 5 und 6 gezeigte erfindungsgemäße Ausbildung der Führungen kann auch nur an den radial außenliegenden Wälzkörpern vorgesehen sein, da bei dem beschriebenen Ausführungsbeispiel in diesem Bereich mehr Raum für eine Verbiegung des Federblatts 248 vorgesehen ist.

Die Figur 27 zeigt einen Torsionsschwingungsdämpfer 260, bei dem eine erste Schwungmasse 261 zwischen zwei Scheiben 262, 263 angeordnet ist. Die beiden Scheiben 262 und 263 sind verdrehsteif über die Brücke 264 miteinander verbunden und zwischen der ersten Schwungmasse 261 und jeweils einer der Scheiben 262 bzw. 263 sind Wälzkörper 265 bzw. 266 angeordnet. Diese Wälzkörper sind im vorliegenden Ausführungsbeispiel Kugeln.

Die Brücke 264 verbindet die Scheiben 262 und 263 unter Zwischenschaltung von Federn 267, 268, die die Scheiben 262 und 263 gegen die Wälzlager 265 und 266 und somit gegen die erste Schwungmasse 261 drücken. Die Drehsteifigkeit der beiden Scheiben 262 und 263 wird durch Verzahnungen an den Scheiben 262, 263, den Federn 267, 268 und/oder an der Anlagefläche der Federn 267, 268 an der Brücke 264 erzielt. Hierbei sind jedoch auch andere vorzugsweise formschlüssige Verbindungen möglich.

Die Berührungsflächen zwischen den Scheiben 262 und 263 und den Wälzkörpern 265, 266 bzw. den Wälzkörpern 265, 266 und der ersten Schwungmasse liegen in einem spitzen Winkel zur Drehachse des Torsionsschwingungsdämpfers und daher liegt die Verbindungsachse zwischen den Anlagepunkten der Wälzkörper ebenfalls in einem spitzen Winkel β zur Drehachse des Schwingungsdämpfers.

Die Anlagebereiche zwischen den Wälzkörpern und der ersten Schwungmasse bzw. den Scheiben 262, 263 sind wie in den Figuren 5 und 6 dargestellt, ausgebildet. Dadurch bewegen sich die Scheiben 262 und 263 auseinander, wenn die erste Schwungmasse 261 sich gegen die Einheit aus den Scheiben 262, 263, den Federn 267, 268 und der Brücke 264 verdreht. Die Federn 267, 268 werden dabei gespannt.

Durch die diagonale Anordnung der Berührungspunkte zwischen den Kugeln und den Scheiben ergibt sich für jede Kugel ein Übersetzungsverhältnis. Betrachtet man die Scheibe 261 als Antrieb, würde sich die Scheibe 262 entsprechend der Übersetzung R1/R2 langsamer drehen wollen und die Scheibe 263 schneller drehen wollen. Durch die starre Verbindung zwischen den Scheiben 262 und 263 wird dieser Vorgang verhindert und somit ein Zwangsschlupf erzeugt. Dieser Zwangsschlupf kann als Dämpfung genutzt werden. Die Dämpfung kann durch Variation der jeweiligen Berührungspunkte jeder Kugel in Abhängigkeit vom Verdrehwinkel angepasst werden.

Die Figur 28 zeigt einen Torsionsschwingungsdämpfer 270 der im Aufbau im wesentlichen dem in Figur 27 gezeigten Torsionsschwingungsdämpfer entspricht. Die Anordnung der parallel wirkenden Tellerfedern 271, 272 und 273, 274 sowie die entgegengesetzt wirkenden Tellerfedern 275, 276 ermöglichen die genaue Einstellung spezieller Federkennlinien, die zu einer definierten Dämpfung führt. Die Scheiben 277 und 278 sind durch die Wälzkörper 279, 280 positioniert. Dies ermöglicht es auf eine Lagerung der Scheiben 277 und 278 zu verzichten.

Der in Figur 29 gezeigte Torsionsschwingungsdämpfer 290 zeigt zwei Scheiben 291 und 292, die radial durch Wälzkörper 293 und 294 auf Stützen 295, 296 gelagert sind. Als Wälzkörper sind im Ausführungsbeispiel Kugeln gezeigt. Da an dieser Stelle jedoch hauptsächlich Radialkräfte aufgenommen werden, können auch Rollen oder Nadellager eingesetzt werden. Die Kugeln 297 und 298 dienen zur Positionierung der Scheiben 291 und 292 und die Tellerfedern 299, 300 dienen als Kraftspeicher.

Radial innerhalb oder radial außerhalb der Kugeln 297 und 298 können weitere Dämpfungseinrichtungen angeordnet werden. Diese bestehen vorzugsweise aus Walzen (nicht gezeigt), die zwischen den Scheiben 291 und 292 und der mittleren Scheibe 301 wirken. Um die Dämpfungswirkung drehwinkelabhängig zu variieren, laufen diese Walzen in Führungsbahnen, die bei erhöhtem Verdrehwinkel zwischen den Scheiben 291 und 292 und dem Mittelteil 301 einen erhöhten Anpressdruck und somit eine erhöhte Dämpfung bewirken.

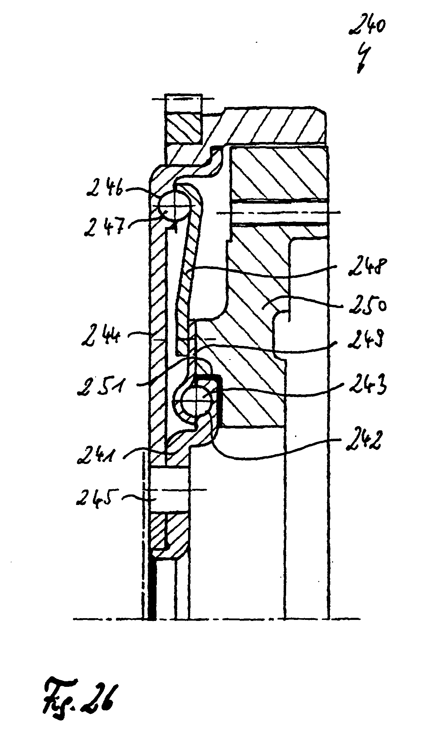

Ein Ausführungsbeispiel eines derartigen Torsionsschwingungsdämpfers 310 mit radial innenliegenden Dämpferrollen 311 und 312 ist in Figur 30 gezeigt. Bei diesem Ausführungsbeispiel ist darüber hinaus zwischen den Scheiben 317 und 318 und den Stützen 315 und 316 eine Gleitlagerung 313 bzw. eine Lagerung mit Nadeln 314 vorgesehen.

Einen schematischen Schnitt durch das in Figur 30 gezeigte Ausführungsbeispiel zeigt Figur 31. Dort ist die Anordnung der Kugeln 319 auf Bahnen 320 und die Anordnung der Rollen 311 auf Bahnen 321 gezeigt. Während die Bahnen 320 im wesentlichen für die Aufgabe der Positionierung ausgebildet sind, dienen die Bahnen 321 der Dämpfung und sind entsprechend geformt.

Die Anordnung radial innenliegender Kugeln 322, die zusammen mit den Scheiben und den Tellerfedern die Funktion eines Federspeichers übernehmen und radial außenliegender Rollen 323, die die Funktion der Dämpfungsarbeit übernehmen ist in Figur 32 gezeigt. Der übrige Aufbau entspricht dem in Figuren 30 und 31 dargestellten Ausführungsbeispiel.

Während in den Figuren 31 und 32 konzentrische bogenförmige Abrollbahnabschnitte für die Kugeln zwischen der ersten Schwungmasse und den Scheiben der zweiten Schwungmasse vorgesehen sind, zeigt die Figur 33, dass die Kugelbahnen auch eine Führung der Kugeln in radialer Richtung bewirken können. In beiden Ausführungsformen haben die Führungsbahnen die Funktion eines Käfigs. Das in Figur 33 gezeigte Ausführungsbeispiel führt jedoch dazu, dass bei einem Abrollen zwischen den Scheiben und den Kugeln in Umfangsrichtung wenig Reibung entsteht (reines Abrollen), während bei einer Bewegung der Kugeln in radialer Richtung aufgrund eines Zwangsschlupfes eine erhöhte Reibung entsteht. Darüber hinaus ermöglicht die radiale Kugelführung, dass um so mehr Kugeln in Umfangsrichtung positioniert werden können. Daher ist es vorteilhaft, möglichst viele Bahnen auf der zur Verfügung stehenden Fläche anzuordnen.

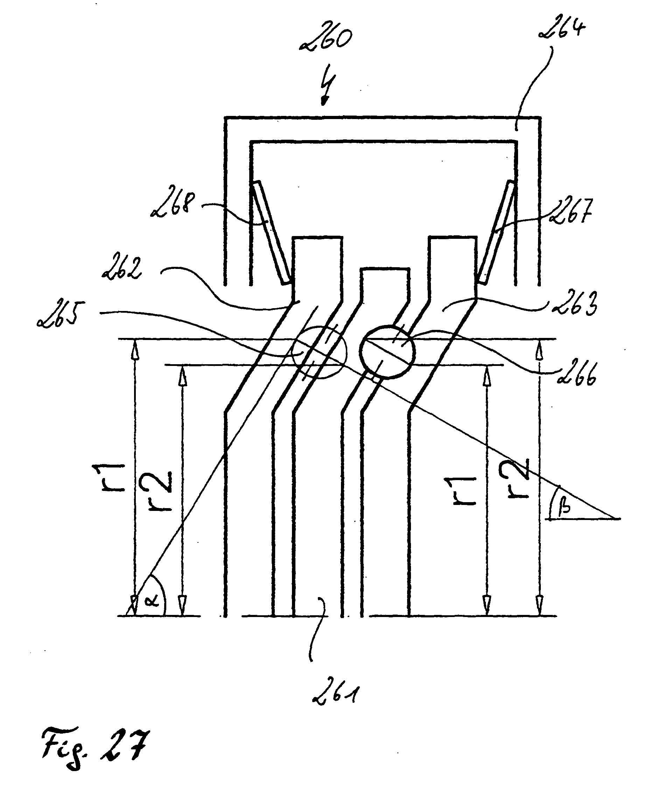

Die Figur 34 zeigt verschiedene Positionen 330, 331, 332, die die Kugel in radialer Erstreckung einnehmen kann. Während die Bewegung der Kugel im Bereich der Position 331 wenig Reibung verursacht, steigt die Reibung zwischen der Kugel und den Schwungmassen sowohl bei einer Bewegung in Richtung der Position 332 als auch bei einer Bewegung der Kugel in Richtung der Position 330 an.

Verschiedene Arten der Anordnung der Bahnen auf den Scheiben sind in den Figuren 35 und 36 gezeigt. Hierbei sind nur prinzipielle Bahnformen angedeutet. Es versteht sich, dass auch weitere Formen und insbesondere die Kombination dieser Bahnformen miteinander weitere Möglichkeiten erschließt, gezielt auf die Reibung zwischen den Schwungmassen Einfluss zu nehmen.

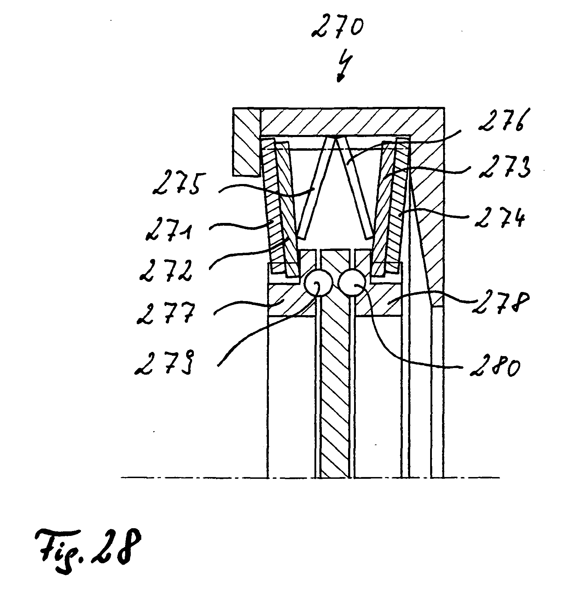

Die Figuren 37 und 38 zeigen einen gefederten Verdrehwinkelanschlag, der unabhängig von der übrigen Ausbildung des Torsionsschwingungsdämpfers eingesetzt werden kann. Die Figur 37 zeigt einen Torsionsschwingungsdämpfer 350 mit einem Anschlag 351, der bei der Bezugsziffer 351 in seiner Mittellage dargestellt ist. Die Bezugsziffer 352 zeigt den Anschlag in seiner einen Begrenzungslage und die Bezugsziffer 353 zeigt den Anschlag in seiner gegenüberliegenden Begrenzungslage. Der Anschlag 351 ist an der zweiten Schwungmasse 354 befestigt und wirkt über Federn 355, 356 gegen eine Anlagefläche 357, 358 an der ersten Schwungmasse 359. Durch die Kompression der Federn 355 und 356 wird somit der maximale Verdrehwinkel zwischen erster und zweiter Schwungmasse begrenzt.

Der obere Teil der Figur 38 zeigt die, in den Bahnen geführten Kugeln 360, 361 in einer mittleren Position, in der minimalen Kräfte auf die Tellerfedern 362, 363 wirken. In dieser Position ist auch der Anschlag 351 in einer mittleren Position, in der er keine Kraft auf die Federn 355, 356 ausübt.

Im unteren Teil der Figur 38 ist eine Situation gezeigt, in der die Kugeln 364, 365 in einer äußeren Position der Bahn liegen, sodass maximale Kräfte auf die Tellerfedern 362, 363 wirken. Hierdurch wird eine hohe Dämpfung bewirkt. Der Anschlag 366 ist bei dieser Position der Schwungräder relativ zu einander in einer Lage, die zu einer Kompression der Federn 355, 356 führt.

Der Anschlag 351 hat entweder einen Freiwinkel, in dem die Scheiben 359, 354 relativ zu einander bewegbar sind, ohne dass die Federn komprimiert werden oder die Federn sind in ihrer nicht-komprimierten Form so lange, dass der Anschlag 351 bei jeder Bewegung mit mindestens einer der Federn zusammenwirkt.

Die Figur 39 zeigt einen Torsionsschwingungsdämpfer 370, bei dem mit einer Schraube 371 an ein Primärteil 372 ein Führungsbahnblech 373 abgeschraubt ist. Auf das Führungsbahnblech 373 ist ein Gleitelement 374 aufgebracht, auf dem das Sekundärteil 375 drehbeweglich gelagert ist. Am Sekundärteil 375 ist ein Stift 376 angebracht, der in axialer Richtung zum Primärteil 372 weist. Zwischen dem Primärteil 372 und dem Sekundärteil 375 ist eine in Figur 40 in der Draufsicht gezeigte Scheibe 377 angeordnet. Diese Scheibe 377 hat Führungsbahnen 378, die über Kugeln 379 auf das Primärteil 372 wirken. Auf der gegenüberliegenden Seite des Bleches 377 sind Kugelbahnen 380 in das Blech eingestanzt, die Führungsbahnen für Kugeln 381 bilden. Diese Kugeln 381 wirken mit dem Führungsbahnblech 373 zusammen. Ein Federblech 382 drückt die Scheibe 377 in Richtung zur ersten Schwungmasse 372, sodass das Blech 377 zwischen den Kugeln 379 und 381 verspannt ist.

Der Stift 376 greift in eine Bohrung 383 in der Scheibe 377 ein, sodass ein Verdrehen der ersten Schwungmasse relativ zur zweiten Schwungmasse dazu führt, dass der Stift 376 die Scheibe 377 hält und die Kugeln 397 und 381 bei einer Bewegung zwischen erster und zweiter Schwungmasse abrollen. Dies führt zu einer Bewegung der Kugeln 379 und 381 auf den Kugelbahnen 378 bzw. 380 und durch die Ausgestaltung der Kugelbahnen zu einer erhöhten Kraft auf die Scheibe 377, die bei einer Verdrehung der Schwungmassen relativ zueinander als Feder gespannt wird.

Im gezeigten Ausführungsbeispiel läuft die Kugel 379 auf einem Eisenblech 384, da das Primärteil 372 als Tiefziehblech derart ausgebildet ist, dass es für die Einformung der Kugelbahn zu weich ist. Der Fachmann erkennt jedoch, dass die Bahn für die Kugeln 379 auch direkt im Primärteil 372 vorgesehen werden kann.

Die Figur 41 zeigt einen Torsionsschwingungsdämpfer 385 der im wesentlichen wie der Torsionsschwingungsdämpfer 370 aufgebaut ist. Anstelle der Feder 382 und des Stiftes 376 ist bei diesem Torsionsschwingungsdämpfer eine Feder 386 vorgesehen, die in entgegengesetzter Richtung gegen einen Ring 387 wirkt, der wiederum die Scheibe 388 zum Sekundärteil 389 hindrückt.

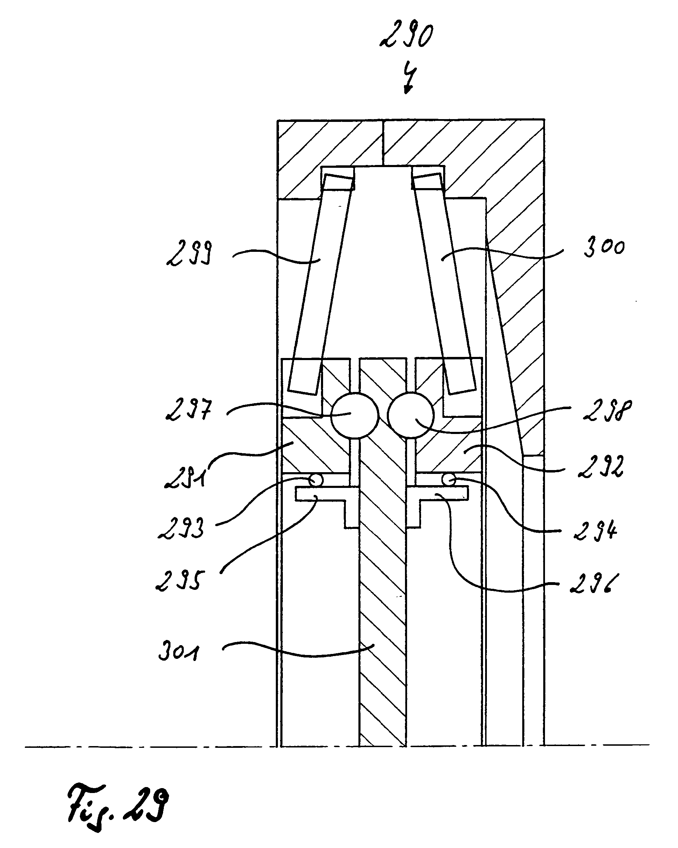

Die Figur 42 zeigt eine alternative Ausgestaltung der in Figur 39 gezeigten Feder 382. Bei dem in Figur 42 gezeigten Torsionsschwingungsdämpfer 390 ist eine Tangentialblattfeder 391 vorgesehen, die mit einer ersten Niete 392 am Sekundärteil 393 und mit einer zweiten Niete 394 an der Scheibe 395 befestigt ist. Die Ausbildung einer derartigen Scheibe 395 mit einer Tangentialblattfeder 391 ist in Figur 43 gezeigt. Der Aufbau der in Figur 43 gezeigten Scheibe 395 entspricht im wesentlichen dem in der Figur 40 gezeigten Aufbau, wobei zusätzlich die zwischen den Nieten 392 und 394 eingespannte Tangentialblattfeder 391 eingezeichnet ist.

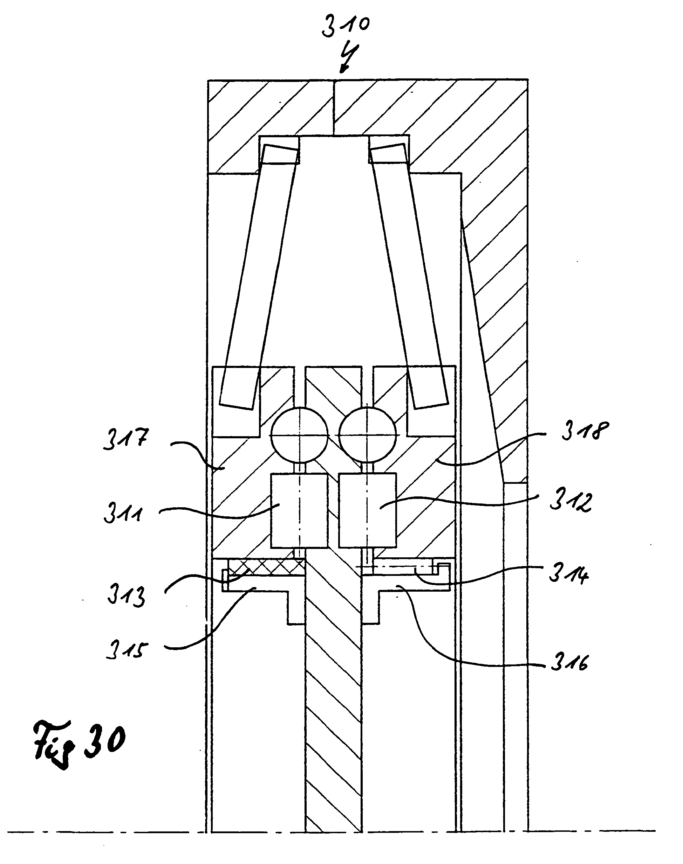

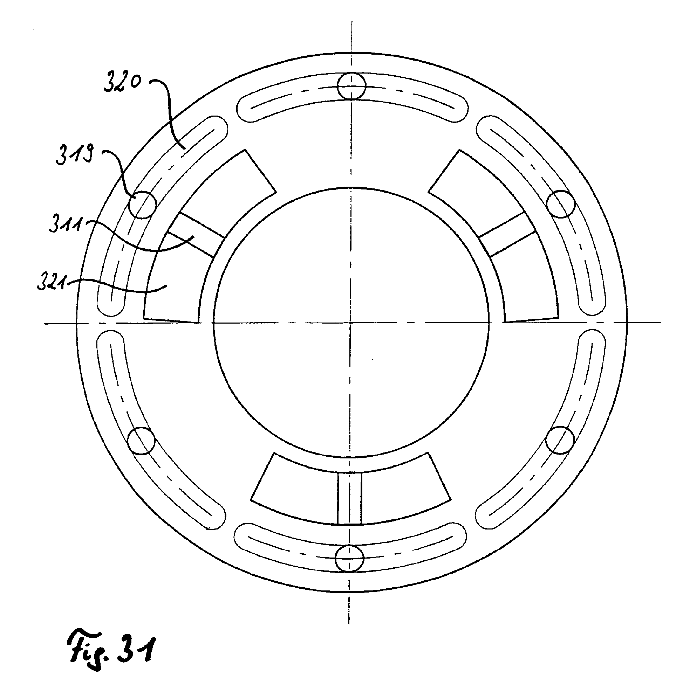

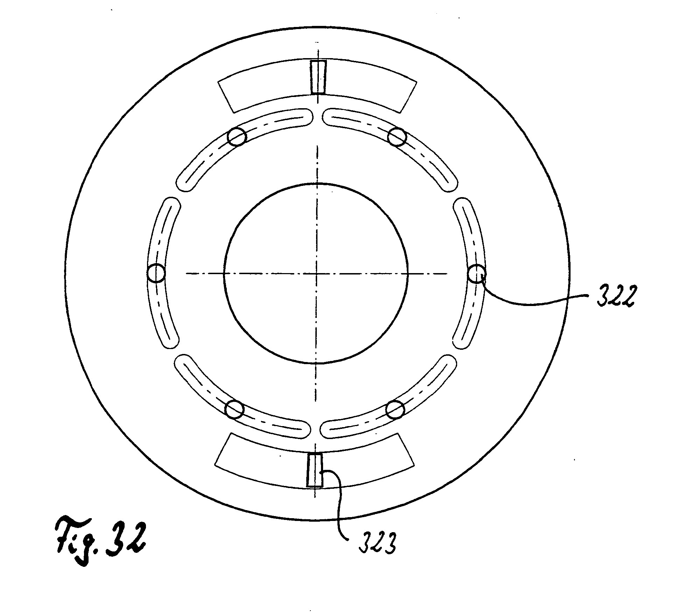

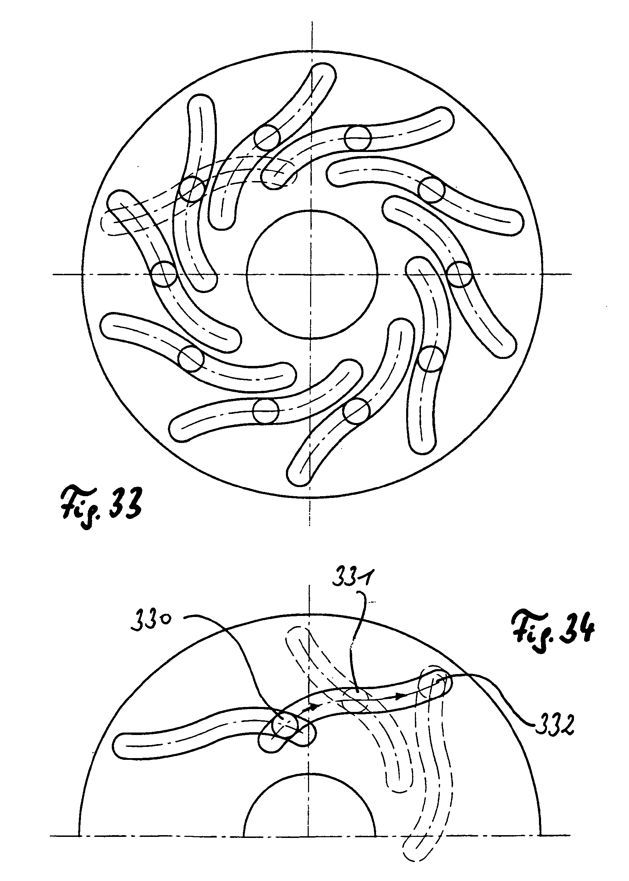

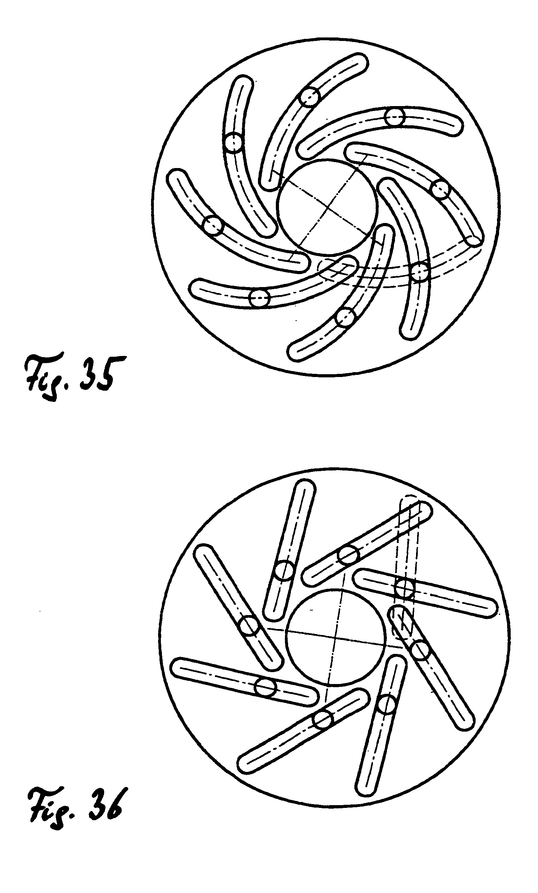

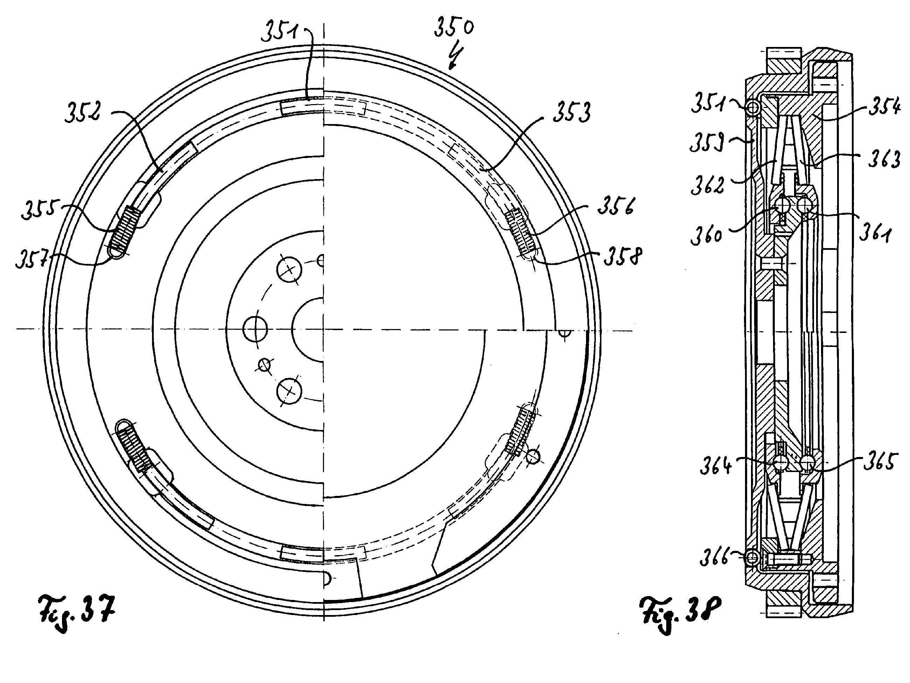

Die Figur 44 zeigt einen Torsionsschwingungsdämpfer 400, bei dem die zuvor beschriebenen Federn 382, 386, 391 durch eine Feder 401 ersetzt werden, die einstückig mit der Scheibe 402 ausgebildet ist. Diese Feder 401 ist mit der Niete 403 mit dem Sekundärteil verbunden und sorgt wie die zuvor beschriebenen Federn für eine Vorspannung der Scheibe, die die Scheibe gegen die Kugeln 404 und 405 drückt.

## Patentansprüche

1. Anordnung eines Federelementes, insbesondere für Torsionsschwingungsdämpfer (1), mit zwei Federblättern (16, 17), die in einem ersten Anlagebereich (23) mit jeweils mindestens einem Wälzkörper (20) zusammenwirken, wobei die Wälzkörper jeweils dem ersten Anlagebereich (23) eines Federblattes (16, 17) gegenüberliegend in einem zweiten Anlagebereich (25) gegen einen zwischen den Federblättern (16, 17) liegenden Anschlag (22) wirken, wobei Anschlag (22) und Federblätter relativ zueinander beweglich positioniert und/oder gelagert sind und bei einer derartigen Relativbewegung mindestens eines der Federblätter (16, 17) gebogen wird, **dadurch gekennzeichnet, dass** die Federblätter (16, 17) aneinander anliegen.

2. Anordnung nach Anspruch 1, ***dadurch gekennzeichnet, dass*** mindestens eines der Federblätter (16, 17) eine Versteifungssicke (45) aufweist.

3. Anordnung nach Anspruch 1 oder 2. ***dadurch gekennzeichnet, dass*** mindestens eines der Federblätter (16, 17) eine Führung für die Wälzkörper (20) aufweist.

4. Anordnung nach Anspruch 3, ***dadurch gekennzeichnet, dass*** die Führung des Federblattes (16, 17) zumindest teilweise durch eine Verformung des Federblattes (16, 17) gebildet ist.

5. Anordnung nach einem der Ansprüche 3 oder 4, ***dadurch gekennzeichnet, dass*** die Führung des Federblattes zumindest teilweise durch einen Durchbruch (86) im Federblatt (82) gebildet ist.

6. Anordnung nach einem der Ansprüche 3 bis 5, ***dadurch gekennzeichnet, dass*** die Führung des Federblattes (91) an in Bewegungsrich-tung gegenüberliegenden Enden (93, 94) eine gegenläufige konische Form aufweist.

7. Anordnung nach einem der Ansprüche 3 bis 6, ***dadurch gekennzeichnet, dass*** die Führung des Federblattes (82, 91) die mögliche Relativbewegung zwischen Federblatt (82, 91) und Anschlag (81) begrenzt.

8. Anordnung nach einem der Ansprüche 3 bis 7, ***dadurch gekennzeichnet, dass*** die Führung des Federblattes (91) zumindest bereichsweise für eine punkt- oder linienförmige Berührung zwischen Federblatt (91) und Wälzkörper (92) ausgebildet ist.

9. Anordnung nach einem der Ansprüche 3 bis 8, ***dadurch gekennzeichnet, dass*** die Führung des Federblattes zumindest bereichsweise für eine flächige Berührung zwischen Federblatt und Wälzkörper ausgebildet ist.

10. Anordnung nach einem der vorhergehenden Ansprüche, ***dadurch gekennzeichnet, dass*** der erste Anlagebereich (23) eine Reibfläche aufweist.

11. Anordnung nach einem der vorhergehenden Ansprüche, ***dadurch gekennzeichnet, dass*** der erste Anlagebereich (23) in einem Randbereich des Federblattes (16, 17) angeordnet ist.

12. Anordnung nach einem der vorhergehenden Ansprüche, ***dadurch gekennzeichnet, dass*** der Anschlag (22) eine Führung für einen Wälzkörper (20) aufweist.

13. Anordnung nach Anspruch 12, ***dadurch gekennzeichnet, dass*** die Führung des Anschlags (22) zumindest teilweise durch eine Verformung des Anschlags (22) gebildet ist.

14. Anordnung nach einem der Ansprüche 12 oder 13, ***dadurch gekennzeichnet, dass*** die Führung des Anschlags (22) zumindest teilweise durch einen Durchbruch im Anschlag gebildet ist.

15. Anordnung nach einem der Ansprüche 12 bis 14, ***dadurch gekennzeichnet, dass*** die Führung des Anschlags (22) an in Bewegungsrichtung gegenüberliegenden Enden eine gegenläufige konische Form aufweist.

16. Anordnung nach einem der Ansprüche 12 bis 15, ***dadurch gekennzeichnet, dass*** die Führung des Anschlags (22) die mögliche Relativbewegung zwischen Federblatt (16, 17) und Anschlag (22) begrenzt.

17. Anordnung nach einem der Ansprüche 12 bis 16, ***dadurch gekennzeichnet, dass*** die Führung des Anschlags (22) zumindest bereichsweise für eine linienförmige Berührung zwischen Anschlag (22) und Wälzkörper (20) ausgebildet ist.

18. Anordnung nach einem der Ansprüche 12 bis 17, ***dadurch gekennzeichnet, dass*** die Führung des Anschlags (22) zumindest bereichsweise für eine flächige Berührung zwischen Anschlag (22) und Wälzkörper (20) ausgebildet ist.

19. Anordnung nach einem der vorhergehenden Ansprüche, ***dadurch gekennzeichnet, dass*** der zweite Anlagebereich (25) eine Reibfläche aufweist.

20. Anordnung nach einem der vorhergehenden Ansprüche, ***dadurch gekennzeichnet, dass*** mehrere Federblätter radial hintereinander geschaltet sind.

21. Anordnung nach einem der vorhergehenden Ansprüche, ***dadurch gekennzeichnet, dass*** mehrere Federblätter axial hintereinander geschaltet sind.

22. Anordnung nach einem der vorhergehenden Ansprüche, ***dadurch gekennzeichnet, dass*** zwei Federblätter (16, 17) auf sich gegenüberliegenden Seiten des Anschlags (22) angeordnet sind.

23. Anordnung nach Anspruch 22, ***dadurch gekennzeichnet, dass*** jeweils zwischen Federblatt (16, 17) und Anschlag (22) mindestens ein Wälzkörper (20) angeordnet ist.

24. Anordnung nach einem der Ansprüche 22 oder 23, ***dadurch gekennzeichnet, dass*** die Federblätter (16, 17) miteinander vorzugsweise durch Nieten verbunden sind.

25. Anordnung nach einem der vorhergehenden Ansprüche, ***dadurch gekennzeichnet, dass*** der Wälzkörper (20) eine Kugel ist.

26. Anordnung nach einem der vorhergehenden Ansprüche, ***dadurch gekennzeichnet, dass*** der Wälzkörper (186, 192) eine Walze ist.

27. Anordnung nach einem der vorhergehenden Ansprüche, ***dadurch gekennzeichnet, dass*** der Wälzkörper aus Stahl ist.

28. Anordnung nach einem der vorhergehenden Ansprüche, ***dadurch gekennzeichnet, dass*** im Bereich des Wälzkörpers (20) ein Schmiermittel vorgesehen ist.

29. Anordnung nach einem der vorhergehenden Ansprüche, ***dadurch gekennzeichnet, dass*** mehrere Wälzkörper (20) parallel geschaltet angeordnet sind.

30. Anordnung nach einem der vorhergehenden Ansprüche, ***dadurch gekennzeichnet, dass*** der Anschlag (22) an ein auf einer Achse befestigbares erstes Bauteil (2) angrenzt.

31. Anordnung nach Anspruch 30, ***dadurch gekennzeichnet, dass*** der Anschlag (22) mit dem ersten Bauteil (2) durch Schweißen verbunden ist.

32. Anordnung nach Anspruch 30, ***dadurch gekennzeichnet, dass*** der Anschlag mit dem ersten Bauteil durch Formschluss, vorzugsweise durch Sicken oder Falzen verbunden ist.

33. Anordnung nach Anspruch 30, ***dadurch gekennzeichnet, dass*** der Anschlag mit dem ersten Bauteil durch einen Kraftschluss, vorzugsweise durch Presssitz verbunden ist.

34. Anordnung nach einem der Ansprüche 30 bis 33, ***dadurch gekennzeichnet, dass*** das erste Bauteil (2) eine Zusatzmasse (11) aufweist.

35. Anordnung nach einem der Ansprüche 30 bis 34, ***dadurch gekennzeichnet, dass*** das erste Bauteil (2) zusammen mit dem Anschlag (22) als Primärteil eines Torsionsschwingungsdämpfers (1) ausgebildet ist.

36. Anordnung nach einem der vorhergehenden Ansprüche, ***dadurch gekennzeichnet, dass*** mindestens eines der Federblätter (16, 17) an ein, vorzugsweise auf einer Achse gelagertes, zweites Bauteil (3) angrenzt.

37. Anordnung nach Anspruch 36, ***dadurch gekennzeichnet, dass*** das zweite Bauteil (3) als Sekundärteil eines Torsionsschwingungsdämpfers (1) ausgebildet ist.

38. Anordnung nach Anspruch 36 oder 37, ***dadurch gekennzeichnet, dass*** das Federblatt mit dem zweiten Bauteil (3) durch Formschluss, vorzugsweise durch Nieten verbunden ist.

39. Anordnung nach Anspruch 36 oder 37, ***dadurch gekennzeichnet, dass*** das Federblatt mit dem zweiten Bauteil (3) durch Schrauben verbunden ist.

40. Anordnung nach einem der Ansprüche 36 bis 39, ***dadurch gekennzeichnet, dass*** zwischen Federblatt (16, 17) und zweitem Bauteil (3) ein Abschirmblech angeordnet ist.

41. Anordnung nach einem der Ansprüche 36 bis 40, ***dudurch gekennzeichnet, dass*** zwischen dem zweiten Bauteil (3) und der Achse ein Lager (33) angeordnet ist.

42. Anordnung nach Anspruch 41, ***dadurch gekennzeichnet, dass*** das Lager zwischen zweitem Bauteil (3) und Achse eine Lagerschale (38) aufweist, die vorzugsweise L-förmig ausgebildet ist.

43. Anordnung nach Anspruch 41, ***dadurch gekennzeichnet, dass*** die H Lagerschale (38) ein Axiallager mit einem ersten Schalenelement (40) und ein Radiallager mit einem zweiten Schalenelement (39) aufweist

44. Anordnung nach einem der vorhergehenden Ansprüche, ***dadurch gekennzeichnet, dass*** erster und/oder zweiter Anlagebereich (23, 25) als Lager ausgebildet sind.

45. Anordnung nach einem der Ansprüche 36 bis 44, ***dadurch gekennzeichnet, dass*** eine äußere Umfangsfläche des ersten Bauteils (2) und eine innere Umfangsfläche des zweiten Bauteils (3) als Lager ausgebildet sind.

46. Anordnung nach einem der Ansprüche 36 bis 44, ***dadurch gekennzeichnet, dass*** von der Achse (36) beabstandet zwischen erstem und zweitem Bauteil ein Lager (33) ausgebildet ist.

47. Anordnung nach einem der vorhergehenden Ansprüche, ***dadurch ge*kennzeichnet, *dass*** mindestens eines der Federblätter (16, 17) im wesentlichen punktsymmetrisch zu einer Drehachse (36) aufgebaut ist.

48. Anordnung nach einem der vorhergehenden Ansprüche, ***dadurch gekennzeichnet, dass*** mindestens eines der Federblätter (16, 17) als Tellerfeder ausgebildet ist.

49. Anordnung nach einem der vorhergehenden Ansprüche, ***dadurch gekennzeichnet, dass*** der Anschlag (22) eine Tellerfeder aufweist.

50. Anordnung nach einem der vorhergehenden Ansprüche, *d**adurch** gekennzeichnet, dass* Anschlag (22) und Federblatt (16, 17) drehbeweglich relativ zueinander gelagert sind.

51. Anordnung nach Anspruch 50, ***dadurch gekennzeichnet, dass*** erster und/oder zweiter Anlagebereich (23, 25) zur Drehbeweglichkeit eine zusätzliche Beweglichkeit zwischen Anschlag (22) und Federblatt (16, 17) ermöglichen.

52. Anordnung nach einem der vorhergehenden Ansprüche, ***dadurch gekennzeichnet, dass*** das Federelement ein Dämpfungsmittel (53) aufweist.

53. Anordnung nach Anspruch 52, ***dadurch gekennzeichnet, dass*** das Dämpfungsmittel an einem der Federblätter oder am zweiten Bauteil angeordnet ist und gegen den Anschlag oder das erste Bauteil wirkt.

54. Anordnung nach Anspruch 52, ***dadurch gekennzeichnet, dass*** das Dämpfungsmittel (53) am Anschlag (64) oder am ersten Bauteil (51) angeordnet ist und gegen eines der Federblätter (63) oder das zweite Bauteil (57) wirkt.

55. Anordnung nach einem der Ansprüche 52 bis 54, ***dadurch gekennzeichnet, dass*** das Dämpfungsmittel eine Wirkfläche mit einer Feinprofilierung aufweist.

56. Anordnung nach einem der Ansprüche 52 bis 55, ***dadurch gekennzeichnet, dass*** das Dämpfungsmittel eine Wirkfläche mit einer axialen Steigung aufweist.

57. Anordnung nach einem der Ansprüche 52 bis 55, ***dadurch gekennzeichnet, dass*** das Dämpfungsmittel eine Wirkfläche mit einer radialen Steigung aufweist.

58. Anordnung nach einem der Ansprüche 56 oder 57, ***dadurch gekennzeichnet, dass*** ein Teil der Wirkfläche ohne Steigung ausgebildet ist.

59. Anordnung nach einem der Ansprüche 52 bis 58 ***dadurch gekennzeichnet, dass*** die Dämpfung relativ zur Geschwindigkeit der rotatorischen Bewegung von Anschlag (107) und Federblatt (105, 106) variierbar ist.

60. Anordnung nach einem der Ansprüche 52 bis 59 ***dadurch gekennzeichnet, dass*** das Dämpfungsmittel (109, 110) eine Masse aufweist, die bei einer Drehung derart einer Zentrifugalkraft ausgesetzt ist, dass sie die Dämpfung verändert.

61. Anordnung nach einem der Ansprüche 52 bis 60 ***dadurch gekennzeichnet, dass*** das Dämpfungsmittel eine Dämpfungstellerfeder (71, 72) aufweist.

62. Anordnung nach Anspruch 61, ***dadurch gekennzeichnet, dass*** die Dämpfungstellerfeder (71, 72) koaxial zum Federelement angeordnet ist.

63. Anordnung nach Anspruch 61, ***dadurch gekennzeichnet, dass*** die Dämpfungstellerfeder radial von einer Drehachse (73) versetzt angeordnet ist.

64. Anordnung nach einem der Ansprüche 52 bis 63, ***dadurch gekennzeichnet, dass*** mindestens eines der Federblätter derart ausgebildet ist, dass sich bei einer Rotation die Anpresskraft des Federblattes an die Wälzkörper verändert.

65. Anordnung nach einem der Ansprüche 52 bis 64, ***dadurch gekennzeichnet, dass*** mindestens eines der Federblätter derart ausgebildet ist, dass sich bei einer Rotation die Anpresskraft des Federblattes an eine Lagerschale verändert.

66. Anordnung nach einem der Ansprüche 52 bis 65, ***dadurch gekennzeichnet, dass*** zwei auf sich gegenüberliegenden Seiten des Anschlags angeordnete Federblätter unterschiedliche Federstärken aufweisen.

67. Anordnung nach einem der Ansprüche 52 bis 66, ***dadurch gekennzeichnet, dass*** auf sich gegenüberliegenden Seiten des Anschlags angeordnete Wälzkörper auf divergierenden und/oder konvergierenden Bahnen geführt sind.

68. Anordnung nach einem der Ansprüche 52 bis 67, ***dadurch gekennzeichnet, dass*** das Dämpfungsmittel mindestens einen sich in Umfangsrichtung erstreckenden Arm (109 110) aufweist, der vorzugsweise radial gegen eine Reibfläche wirkt.

69. Anordnung nach Anspruch 68, ***dadurch gekennzeichnet, dass*** der Arm (109, 110) mit dem Anschlag (107) oder dem ersten Bauteil und die Reibfläche mit einem der Federblätter (102, 103) verbunden ist.

70. Anordnung nach einem der Ansprüche 52 bis 69, ***dadurch gekennzeichnet, dass*** das Federelement ein Teil eines Trilokwandlers ist.

71. Anordnung nach einem der vorhergehenden Ansprüche, ***dadurch gekennzeichnet, dass*** das Federelement zwischen einem Anschlag und einem Reibbelag angeordnet ist.

72. Anordnung nach einem der vorhergehenden Ansprüche, ***dadurch gekennzeichnet, dass*** die Position der Anlagebereiche so gewählt ist, dass zwischen Federblatt und Anschlag ein Zwangsschlupf entsteht.

73. Anordnung nach Anspruch 72, ***dadurch gekennzeichnet, dass*** zwei drehstarr miteinander verbundene um eine Drehachse drehbare Federblätter (262, 263) auf einen dazwischen angeordneten Anschlag (261) wirken und die Verbindungsachse zwischen erstem und zweitem Anlagebereich in einem Winkel (β) zur Drehachse angeordnet ist.

74. Anordnung nach einem der vorhergehenden Ansprüche, ***dadurch gekennzeichnet, dass*** mindestens eines der Federblätter von einer Scheibe (277) und einer Blattfeder (271) gebildet ist.

75. Anordnung nach einem der vorhergehenden Ansprüche, ***dadurch gekennzeichnet, dass*** Anschlag und Federblatt durch ein Gleitlager (313) relativ zueinander gelagert sind.

76. Anordnung nach einem der vorhergehenden Ansprüche, ***dadurch gekennzeichnet, dass*** Anschlag und Federblatt durch ein Wälzlager (393, 394), insbesondere ein Nadellager, relativ zueinander gelagert sind.

77. Anordnung nach einem der vorhergehenden Ansprüche, ***dadurch gekennzeichnet, dass*** es eine Führung für Wälzkörper aufweist, die die Wälzkörper mit einer radialen Bewegungskomponente führt.

78. Anordnung nach einem der vorhergehenden Ansprüche, ***dadurch gekennzeichnet, dass*** es einen gefederten Verdrehwinkelanschlag aufweist.

79. Anordnung nach einem der vorhergehenden Ansprüche, ***dadurch gekennzeichnet, dass*** mindestens eines der Federblätter (377) in radial beabstandeten Bereichen mit Wälzkörpern (379, 381) zusammen wirkt.

80. Anordnung nach einem der vorhergehenden Ansprüche, ***dadurch gekennzeichnet, dass*** mindestens eines der Federblätter (377) mittels einer Feder (382) gegen die Wälzkörper (379, 381) gedrückt wird.

81. Anordnung nach Anspruch 80, ***dadurch gekennzeichnet, dass*** die Feder (401) ein Teil des Federblattes (402) ist.

## Claims

1. An arrangement of a spring element, more specifically for a torsional vibration damper (1), having two spring blades (16, 17) that cooperate in a first abutment region (23) with at least one roll body (20), the roll bodies being respectively disposed oppositely to the first abutment region (23) of a spring blade (16, 17) and acting in a second abutment region (25) against a limit stop (22) positioned between the spring blades (16, 17), the limit stop (22) and the spring blades being movably positioned and/or born relative to each other and at least one of the spring blades (16, 17) being bent in case of such a relative motion, ***characterized in that*** the spring blades (16, 17) come to rest on each other.

2. The arrangement according to claim 1, ***characterized in that*** at least one of the spring blades (16, 17) has a stiffening bead (45).

3. The arrangement according to claim 1 or 2, ***characterized in that*** at least one of the spring blades (16, 17) has a guide for the roll bodies (20).

4. The arrangement according to claim 3, ***characterized in that*** the guide of the spring blade (16, 17) is at least partly shaped by a deformation of the spring blade (16, 17).

5. The arrangement according to one of the claims 3 or 4, ***characterized in that*** the guide of the spring blade is at least partly shaped by an perforation (86) in the spring blade (16, 17).

6. The arrangement according to one of the claims 3 to 5, ***characterized in that*** the guide of the spring blade (91) has an opposing conical form at its in the direction of movement opposing ends (93, 94).

7. The arrangement according to one of the claims 3 to 6, ***characterized in that*** the guide of the spring blade (82, 91) restricts the possible relative motion between the spring blade (82, 91) and the limit-stop (81).

8. The arrangement according to one of the claims 3 to 7, ***characterized in that*** the guide of the spring blade (91) is configured at least in some regions to provide a punctual or extended contact between the spring blade (91) and the roll body (92).

9. The arrangement according to one of the claims 3 to 8, ***characterized in that*** the guide of the spring blade is configured at least in some regions to provide a planar contact between the spring blade and the roll body.

10. The arrangement according to one of the afore-mentioned claims, ***characterized in that*** the first abutment region (23) has a friction surface.

11. The arrangement according to one of the afore-mentioned claims, ***characterized in that*** the first abutment region (23) is disposed in a border region of the spring blade (16, 17).

12. The arrangement according to one of the afore-mentioned claims, ***characterized in that*** the limit-stop (22) has a guide for a roll body (20).

13. The arrangement according to claim 12, ***characterized in that*** the guide of the limit-stop (22) is at least partly shaped by a deformation of the limit-stop (22).

14. The arrangement according to one of the claims 12 or 13, ***characterized in that*** the guide of the limit-stop (22) is at least partly shaped by a perforation in the limit-stop.

15. The arrangement according to one of the claims 12 to 14, ***characterized in that*** the guide of the limit-stop (22) has an opposing conical form at its in the direction of movement opposing ends.

16. The arrangement according to one of the claims 12 to 15, ***characterized in that*** the guide of the limit-stop (22) restricts the possible relative motion between the spring blade (16, 17) and the limit-stop (22).

17. The arrangement according to one of the claims 12 to 16, ***characterized in that*** the guide of the limit-stop (22) is configured at least in some regions to provide an extended contact between the limit-stop (22) and the roll body (20).

18. The arrangement according to one of the claims 12 to 17, ***characterized in that*** the guide of the limit-stop (22) is configured at least in some regions to provide a planar contact between the limit-stop (22) and the roll body (20).

19. The arrangement according to one of the afore-mentioned claims, ***characterized in that*** the second abutment region (25) has a friction surface.

20. The arrangement according to one of the afore-mentioned claims, ***characterized in that*** several spring blades are radially series-connected.

21. The arrangement according to one of the afore-mentioned claims, ***characterized in that*** several spring blades are axially series-connected.

22. The arrangement according to one of the afore-mentioned claims, ***characterized in that*** two spring blades (16, 17) are disposed on opposing sides of the limit-stop (22).

23. The arrangement according to claim 22, ***characterized in that*** at least one roll body (20) is disposed between the spring blade (16, 17) and the limit-stop (22).

24. The arrangement according to one of the claims 22 or 23, ***characterized in that*** the spring blades (16, 17) are preferably connected to each other by rivets.

25. The arrangement according to one of the afore-mentioned claims, ***characterized in that*** the roll body (20) is a sphere.

26. The arrangement according to one of the afore-mentioned claims, ***characterized in that*** the roll body (186, 192) is a roll.

27. The arrangement according to one of the afore-mentioned claims, ***characterized in that*** the roll body is made of steel.

28. The arrangement according to one of the afore-mentioned claims, ***characterized in that*** a lubricant is provided in the region of the roll body (20).

29. The arrangement according to one of the afore-mentioned claims, ***characterized in that*** several roll bodies (20) are disposed in parallel connection.

30. The arrangement according to one of the afore-mentioned claims, ***characterized in that*** the limit-stop (22) borders a first component (2) adapted to be secured on an axis.

31. The arrangement according to claim 30, ***characterized in that*** the limit-stop (22) is connected to the first component (2) by welding.

32. The arrangement according to claim 30, ***characterized in that*** the limit-stop is connected to the first component by a positive fit, preferably by beading or folding.

33. The arrangement according to claim 30, ***characterized in that*** the limit-stop is connected to the first component by a frictional connection, preferably by an interference fit.

34. The arrangement according to one of the claims 30 to 33, ***characterized in that*** the first component (2) has an additional mass (11).

35. The arrangement according to one of the claims 30 to 34, ***characterized in that*** the first component (2) is configured together with the limit-stop as a primary part of a torsional vibration damper (1).

36. The arrangement according to one of the afore-mentioned claims, ***characterized in that*** at least one of the spring blades (16, 17) borders a second component (3) preferably born on an axis.

37. The arrangement according to claim 36, ***characterized in that*** the second component (3) is configured as a secondary part of a torsional vibration damper (1).

38. The arrangement according to claim 36 or 37, ***characterized in that*** the spring blade is connected to the second component (3) by a positive fit, preferably by rivets.

39. The arrangement according to claim 36 or 37, ***characterized in that*** the spring blade is connected to the second component (3) by screws.

40. The arrangement according to one of the claims 36 to 39, ***characterized in that*** a screening sheet is disposed between the spring blade (16, 17) and the second component (3).

41. The arrangement according to one of the claims 36 to 40, ***characterized in that*** a bearing (33) is disposed between the second component (3) and the axis.

42. The arrangement according to claim 41, ***characterized in that*** the bearing between the second component (3) and the axis has a bearing seat (38) that is preferably configured in a U-shape.

43. The arrangement according to claim 41, ***characterized in that*** the bearing seat (38) has an axial bearing with a first seat element (40) and a radial bearing with a second seat element (39).

44. The arrangement according to one of the afore-mentioned claims, ***characterized in that*** the first and/or second abutment region (23, 25) are configured as a bearing.

45. The arrangement according to one of the claims 36 to 44, ***characterized in that*** an outer circumference of the first component (2) and an inner circumference of the second component (3) are configured as a bearing.

46. The arrangement according to one of the claims 36 to 44, ***characterized in that*** bearing (33) is configured between the first and the second component at a distance from the axis (36).

47. The arrangement according to one of the afore-mentioned claims, ***characterized in that*** at least one of the spring blades (16, 17) is substantially constructed point-symmetrically to a rotational axis (36).

48. The arrangement according to one of the afore-mentioned claims, ***characterized in that*** at least one of the spring blades (16, 17) is configured as a disk spring.

49. The arrangement according to one of the afore-mentioned claims, ***characterized in that*** the limit-stop (22) has a disk spring.

50. The arrangement according to one of the afore-mentioned claims, ***characterized in that*** the limit-stop (22) and the spring blade (16, 17) are mounted for rotation relative to each other.

51. The arrangement according to claim 50, ***characterized in that*** additionally to the rotational mobility the first and/or the second abutment region (23, 25) allow a mobility between the limit-stop (22) and the spring blade (16, 17).

52. The arrangement according to one of the afore-mentioned claims, ***characterized in that*** the spring element has a damping means (53).

53. The arrangement according to claim 52, ***characterized in that*** the damping means is disposed on one of the spring blades or on the second component and acts against the limit-stop or the first component.

54. The arrangement according to claim 52, ***characterized in that*** the damping means (53) is disposed on the limit-stop (64) or on the first component (51) and acts against one of the spring blades (63) or the second component (57).

55. The arrangement according to one of the claims 52 to 54, ***characterized in that*** the damping means has an active surface with a siping.

56. The arrangement according to one of the claims 52 to 55, ***characterized in that*** the damping means has an active surface with an axial inclination.

57. The arrangement according to one of the claims 52 to 55, ***characterized in that*** the damping means has an active surface with a radial inclination.

58. The arrangement according to one of the claims 56 or 57, ***characterized in that*** a portion of the active surface is configured without inclination.

59. The arrangement according to one of the claims 52 to 58, ***characterized in that*** the damping means is variable relative to the speed of the rotational motion of the limit-stop (107) and the spring blade (105, 106).

60. The arrangement according to one of the claims 52 to 59, ***characterized in that*** the damping means (109, 110) has a mass that is submitted to such a centrifugal force during a rotation that it changes the damping.

61. The arrangement according to one of the claims 52 to 60, ***characterized in that*** the damping means has a damping disk spring (71, 72).

62. The arrangement according to claim 61, ***characterized in that*** the damping disk spring (71, 72) is disposed coaxially to the spring element.

63. The arrangement according to claim 61, ***characterized in that*** the damping disk spring is disposed offset with respect to a rotational axis (73).

64. The arrangement according to one of the claims 52 to 63, ***characterized in that*** at least one of the spring blades is configured in such a manner that the contact force of the spring blade onto the roll bodies changes during rotation.

65. The arrangement according to one of the claims 52 to 64, ***characterized in that*** at least one of the spring blades is configured in such a manner that the contact force of the spring blade onto a bearing seat changes during rotation.

66. The arrangement according to one of the claims 52 to 65, ***characterized in that*** two spring blades disposed on opposing sides of the limit-stop have different spring forces.

67. The arrangement according to one of the claims 52 to 66, ***characterized in that*** roll bodies disposed on opposing sides of the limit-stop are guided on divergent and/or convergent paths.

68. The arrangement according to one of the claims 52 to 67, ***characterized in that*** the damping means has at least one arm (109, 110) that acts preferably radially against a friction surface and extends in direction of the circumference.

69. The arrangement according to claim 68, ***characterized in that*** the arm (109, 110) is connected to the limit-stop (107) or the first component and the friction surface is connected to one of the spring blades (102, 103).

70. The arrangement according to one of the claims 52 to 69, ***characterized in that*** the spring element is a portion of a Trilok torque converter.

71. The arrangement according to one of the afore-mentioned claims, ***characterized in that*** the spring element is disposed between a limit-stop and a friction lining.

72. The arrangement according to one of the afore-mentioned claims, ***characterized in that*** the position of the abutment regions is selected in such a manner that a forced slip appears.

73. The arrangement according claim 72, ***characterized in that*** two spring blades (262, 263) connected to each other in a rotationally stiff manner and rotatable about a rotational axis, act on a limit-stop disposed in between and that the connection axis between the first and the second abutment region is disposed in an angle (β) to the rotational axis.

74. The arrangement according to one of the afore-mentioned claims, ***characterized in that*** at least one of the spring blades is formed by a disk (277) and a leaf spring (271).

75. The arrangement according to one of the afore-mentioned claims, ***characterized in that*** the limit-stop and the spring blade are borne relative to each other by a slide bearing.

76. The arrangement according to one of the afore-mentioned claims, ***characterized in that*** the limit-stop and the spring blade are borne relative to each other by a roller bearing (393, 394), more specifically a needle bearing.

77. The arrangement according to one of the afore-mentioned claims, ***characterized in that*** it has a guide for roll bodies that guides the roll bodies with a radial motion component.

78. The arrangement according to one of the afore-mentioned claims, ***characterized in that*** it has a spring-mounted rotation angle limit-stop.

79. The arrangement according to one of the afore-mentioned claims, ***characterized in that*** at least one of the spring blades (377) interacts in radially spaced regions with roll bodies (379, 381).

80. The arrangement according to one of the afore-mentioned claims, ***characterized in that*** at least one of the spring blades (377) is pressed against the roll bodies (379, 381) by means of a spring (382).

81. The arrangement according to claim 80, ***characterized in that*** the spring (401) is a portion of the spring blade (402).

## Revendications

1. Un montage d'un élément de ressort, notamment pour un amortisseur de vibrations de torsion (1), ayant deux lames de ressort (16, 17) qui interagissent dans une première zone d'appui (23) avec respectivement au moins un corps de roulement (20), les corps de roulement agissant respectivement, dans une deuxième zone d'appui (25) située en regard de la première zone d'appui (23) d'une lame de ressort (16, 17), contre une butée située entre les lames de ressort (16, 17), la butée (22) et les lames de ressort étant positionnées et/ou montées mobiles l'une par rapport à l'autre et au moins une des lames de ressort (16, 17) étant fléchie lors d'un tel mouvement relatif, ***caractérisé en ce que*** les lames de ressort (16, 17) sont en appui l'une contre l'autre.

2. Le montage selon la revendication 1, ***caractérisé en ce qu'**au* moins l'une des lames de ressort (16, 17) comporte une bande de renforcement (45).

3. Le montage selon la revendication 1 ou 2, ***caractérisé en ce qu'**au* moins l'une des lames de ressort (16, 17) comporte un guidage pour les corps de roulement (20).

4. Le montage selon la revendication 3, ***caractérisé en ce que*** le guidage de la lame de ressort (16, 17) est du moins partiellement formé par une déformation de la lame de ressort (16, 17).

5. Le montage selon l'une des revendication 3 ou 4, ***caractérisé en ce que*** le guidage de la lame de ressort est du moins partiellement formé par un percement (86) dans la lame de ressort (82).

6. Le montage selon l'une quelconque des revendications 3 à 5, ***caractérisé en ce que*** le guidage de la lame de ressort (91) comporte à ses extrémités situées en regard l'une de l'autre dans le sens du mouvement une forme conique opposée à ce dernier.

7. Le montage selon l'une quelconque des revendications 3 à 6, ***caractérisé en ce que*** le guidage de la lame de ressort (82, 91) limite le mouvement relatif possible entre la lame de ressort (82, 91) et la butée (81).

8. Le montage selon l'une quelconque des revendications 3 à 7, ***caractérisé en ce que*** le guidage de la lame de ressort (91) est configuré du moins dans certaines zones de manière à permettre un contact linéaire ou ponctuel entre la lame de ressort (91) et le corps de roulement (92).

9. Le montage selon l'une quelconque des revendications 3 à 8, ***caractérisé en ce que*** le guidage de la lame de ressort est configuré du moins dans certaines zones de manière à permettre un contact surfacique entre la lame de ressort et le corps de roulement.

10. Le montage selon l'une quelconque des revendications précédentes, ***caractérisé en ce que*** la première zone d'appui comporte une surface de friction.

11. Le montage selon l'une quelconque des revendications précédentes, ***caractérisé en ce que*** la première zone d'appui est disposée dans une zone en bordure de la lame de ressort (16, 17).

12. Le montage selon l'une quelconque des revendications précédentes, ***caractérisé en ce que*** la butée (22) comporte un guidage pour un corps de roulement (20).

13. Le montage selon la revendication 12, ***caractérisé en ce que*** le guidage de la butée (22) est du moins partiellement formé par une déformation de la butée (22).

14. Le montage selon l'une quelconque des revendications 12 ou 13, ***caractérisé en ce que*** le guidage de la butée (22) est du moins partiellement formé par un percement dans la butée.

15. Le montage selon l'une quelconque des revendications 12 à 14, ***caractérisé en ce que*** le guidage de la butée (22) comporte à ses extrémités situées en regard l'une de l'autre dans le sens du mouvement, une forme conique opposée à ce dernier.

16. Le montage selon l'une quelconque des revendications 12 à 15, ***caractérisé en ce que*** le guidage de la butée (22) limite le mouvement relatif possible entre la lame de ressort (16, 17) et la butée (22).

17. Le montage selon l'une quelconque des revendications 12 à 16, ***caractérisé en ce que*** le guidage de la butée (22) est configuré du moins dans certaines zones de manière à permettre un contact linéaire entre la butée (22) et le corps de roulement (20).

18. Le montage selon l'une quelconque des revendications 12 à 17, ***caractérisé en ce que*** le guidage de la butée (22) est configuré du moins dans certaines zones de manière à permettre un contact surfacique entre la butée (22) et le corps de roulement (20.

19. Le montage selon l'une quelconque des revendications précédentes, ***caractérisé en ce que*** la deuxième zone d'appui (25) comporte une surface de friction.

20. Le montage selon l'une quelconque des revendications précédentes, ***caractérisé en ce que*** plusieurs lames de ressort sont montées radialement en série.

21. Le montage selon l'une quelconque des revendications précédentes, ***caractérisé en ce que*** plusieurs lames de ressort sont montées axialement en série.

22. Le montage selon l'une quelconque des revendications précédentes, ***caractérisé en ce que*** deux lames de ressort (16, 17) sont disposées sur des côtés opposés de la butée (22).

23. Le montage selon la revendication 23, ***caractérisé en ce qu'**au* moins un corps de roulement (20) est disposé respectivement entre la lame de ressort (16, 17) et la butée (22).

24. Le montage selon l'une quelconque des revendications 22 ou 23, ***caractérisé en ce que*** les lames de ressort (16, 17) sont connectées l'une à l'autre de préférence au moyen de rivets.

25. Le montage selon l'une quelconque des revendications précédentes, ***caractérisé en ce que*** le corps de roulement (20) est une boule.

26. Le montage selon l'une quelconque des revendications précédentes, ***caractérisé en ce que*** le corps de roulement (186, 192) est un cylindre.

27. Le montage selon l'une quelconque des revendications précédentes, ***caractérisé en ce que*** le corps de roulement est en acier.

28. Le montage selon l'une quelconque des revendications précédentes, ***caractérisé en ce qu'**un* lubrifiant est prévu dans la zone du corps de roulement (20).

29. Le montage selon l'une quelconque des revendications précédentes, ***caractérisé en ce que*** plusieurs corps de roulement (20) sont disposés en parallèle.

30. Le montage selon l'une quelconque des revendications précédentes, ***caractérisé en ce que*** la butée (22) est attenante à un composant (2) susceptible d'être monté sur un axe.

31. Le montage selon la revendication 30, ***caractérisé en ce que*** la butée (22) est connectée au premier composant (2) par une soudure.

32. Le montage selon la revendication 30, ***caractérisé en ce que*** la butée est connectée au premier composant par coopération de forme, de préférence par nervurage ou pliage.

33. Le montage selon la revendication 30, ***caractérisé en ce que*** la butée est connectée au premier composant par liaison de force, de préférence par emmanchement à force.

34. Le montage selon l'une quelconque des revendications 30 à 33, ***caractérisé en ce que*** le premier composant (2) comporte une masse supplémentaire (11).

35. Le montage selon l'une quelconque des revendications 30 à 34, ***caractérisé en ce que*** le premier composant (2) est configuré avec la butée (22) en tant qu'élément primaire d'un amortisseur de vibrations de torsion (1).

36. Le montage selon l'une quelconque des revendications précédentes, ***caractérisé en ce* qu'**au moins l'une des lames de ressort (16, 17) est attenante à un deuxième composant (3) de préférence montée sur un axe.

37. Le montage selon la revendication 36, ***caractérisé en ce que*** le deuxième composant (3) est configuré en tant qu'élément secondaire d'un amortisseur de vibrations de torsion.

38. Le montage selon la revendication 36 ou 37, ***caractérisé en ce que*** la lame de ressort est connectée au deuxième composant (3) par coopération de forme, de préférence par des rivets.

39. Le montage selon la revendication 36 ou 37, ***caractérisé en ce que*** la lame de ressort est connectée au deuxième composant (3) par des vis.

40. Le montage selon l'une quelconque des revendications 36 à 39, ***caractérisé en ce qu*'**une tôle blindée est disposée entre la lame de ressort (16, 17) et le deuxième composant (3).

41. Le montage selon l'une quelconque des revendications 36 à 40, ***caractérisé en ce qu*'**un palier (33) est disposé entre le deuxième composant (3) et l'axe.

42. Le montage selon la revendication 41, ***caractérisé en ce que*** le palier entre le deuxième composant (3) et l'axe comporte un coussinet de palier (38) de préférence conformé en L.

43. Le montage selon la revendication 41, ***caractérisé en ce que*** le coussinet de palier (38) comporte un palier axial avec un premier élément de coussinet (40) et un palier radial avec un deuxième élément de coussinet (39).

44. Le montage selon l'une quelconque des revendications précédentes, ***caractérisé en ce que*** la première et/ou la deuxième zone d'appui (23, 25) est configuré en palier.

45. Le montage selon l'une quelconque des revendications 36 à 44, ***caractérisé en ce* qu'**une surface périphérique extérieure du premier composant (2) et une surface périphérique intérieur du deuxième composant (3) sont configuré en palier.

46. Le montage selon l'une quelconque des revendications 36 à 44, ***caractérisé en ce qu'**un* palier (33) est configuré à distance de l'axe (36) entre le premier et le deuxième composant.

47. Le montage selon l'une quelconque des revendications précédentes, ***caractérisé en ce qu'**au* moins l'une des lames de ressort (16, 17) est substantiellement assemblée de manière centro-symétrique par rapport à un axe de rotation (36).

48. Le montage selon l'une quelconque des revendications précédentes, ***caractérisé en ce qu'**au* moins l'une des lames de ressort (16, 17) est configurée en ressort à diaphragme.

49. Le montage selon l'une quelconque des revendications précédentes, ***caractérisé en ce que*** la butée (22) comporte un ressort à diaphragme.

50. Le montage selon l'une quelconque des revendications précédentes, ***caractérisé en ce que*** la butée (22) et la lame de ressort (16, 17) sont montées mobiles en rotation l'une par rapport à l'autre.

51. Le montage selon la revendication 50, ***caractérisé en ce que*** la première et/ou la deuxième zone d'appui (23, 25) permettent en plus de la mobilité rotative une mobilité supplémentaire entre la butée (22) et la lame de ressort (16, 17).

52. Le montage selon l'une quelconque des revendications précédentes, ***caractérisé en ce que*** l'élément de ressort comporte un moyen d'amortissement (53).

53. Le montage selon la revendication 52, ***caractérisé en ce que*** le moyen d'amortissement est disposé sur l'une des lames de ressort ou sur le deuxième composant et agit contre la butée ou le premier composant.

54. Le montage selon la revendication 52, ***caractérisé en ce que*** le moyen d'amortissement (53) est disposé sur la butée (64) ou sur le premier composant (51) et agit contre l'une des lames de ressort (63) ou le deuxième composant (57).

55. Le montage selon l'une quelconque des revendications 52 à 54, ***caractérisé en ce que*** le moyen d'amortissement comporte une surface effective à profil fin.

56. Le montage selon l'une quelconque des revendications 52 à 55, ***caractérisé en ce que*** le moyen d'amortissement comporte une surface effective avec une inclinaison axiale.

57. Le montage selon l'une quelconque des revendications 52 à 55, ***caractérisé en ce que*** le moyen d'amortissement comporte une surface effective avec une inclinaison radiale.

58. Le montage selon l'une quelconque des revendications 56 ou 57, ***caractérisé en ce* qu'**une partie de la surface effective est configurée sans inclinaison.

59. Le montage selon l'une quelconque des revendications 52 à 58, ***caractérisé en ce que*** l'amortissement est variable en fonction de la vitesse du mouvement de rotation de la butée (107) et de la lame de ressort (105, 106).

60. Le montage selon l'une quelconque des revendications 52 à 59, ***caractérisé en ce que*** le moyen d'amortissement (109, 110) comporte une masse qui lors d'une rotation est soumise à une force centrifuge telle qu'elle modifie l'amortissement.

61. Le montage selon l'une quelconque des revendications 52 à 60, ***caractérisé en ce que*** le moyen d'amortissement comporte un ressort à diaphragme d'amortissement.

62. Le montage selon la revendication 61, ***caractérisé en ce que*** le ressort à diaphragme d'amortissement (71, 71) est disposé coaxialement avec l'élément de ressort.

63. Le montage selon la revendication 61, ***caractérisé en ce que*** le ressort à diaphragme d'amortissement est disposé radialement en décalage par rapport à l'axe de rotation (73).

64. Le montage selon l'une quelconque des revendications 52 à 63, ***caractérisé en ce qu'**au* moins l'une des lames de ressort est configurée de manière à ce que la force de pression de la lame de ressort sur les corps de roulement est modifiée lors d'une rotation.

65. Le montage selon l'une quelconque des revendications 52 à 64, ***caractérisé en ce qu'**au* moins l'une des lames de ressort est configuré de manière à ce que la force de pression de la lame de ressort sur un coussinet de palier est modifiée lors d'une rotation.

66. Le montage selon l'une quelconque des revendications 52 à 65, ***caractérisé en ce que*** deux lames de ressort disposées sur des côtés opposés de la butée comportent des puissances de ressort différentes.

67. Le montage selon l'une quelconque des revendications 52 à 66, ***caractérisé en ce que*** des corps de roulement disposés sur des côtés opposés de la butée sont guidées sur des voies divergentes et/ou convergentes.

68. Le montage selon l'une quelconque des revendications 52 à 67, ***caractérisé en ce que*** le moyen d'amortissement comporte au moins un bras (109, 110) s'étendant en direction de la circonférence qui agit de préférence radialement sur une surface de friction.

69. Le montage selon la revendication 68, ***caractérisé en ce que*** le bras (109, 110) est connecté à la butée (107) ou au premier composant et que la surface de friction est connectée à l'une des lames de ressort (102, 103).

70. Le montage selon l'une quelconque des revendications 52 à 69, ***caractérisé en ce que*** l'élément de ressort est une partie d'un convertisseur Trilok.

71. Le montage selon l'une quelconque des revendications précédentes, ***caractérisé en ce que*** l'élément de ressort est disposé entre une butée et une garniture de friction.

72. Le montage selon l'une quelconque des revendications précédentes, ***caractérisé en ce que*** la position des zones d'appui est choisie de manière à ce qu'un glissement contraint apparaît entre la lame de ressort et la butée.

73. Le montage selon la revendication 72, ***caractérisé en ce que*** deux lames de ressort (262, 263) connectées l'une à l'autre de manière rigide et mobiles en rotation autour d'un axe de rotation agissent sur une butée (261) disposée entre les deux et que l'axe de connexion est disposé entre la première et la deuxième zone d'appui à un angle (β) par rapport à l'axe de rotation.

74. Le montage selon l'une quelconque des revendications précédentes, ***caractérisé en ce qu'**au* moins l'une des lames de ressort est constituée par un disque (277) et un ressort à lames (271).

75. Le montage selon l'une quelconque des revendications précédentes, ***caractérisé en ce que*** la butée et la lame de ressort sont montées l'une par rapport à l'autre sur un palier glissant.

76. Le montage selon l'une quelconque des revendications précédentes, ***caractérisé en ce que*** la butée et la lame de ressort sont montées l'une par rapport à l'autre sur un palier à roulement (393, 394), notamment un palier à aiguilles.

77. Le montage selon l'une quelconque des revendications précédentes, ***caractérisé en ce* qu'**il comporte un guidage pour les corps de roulement, qui guide les corps de roulement avec une composante de mouvement radiale.

78. Le montage selon l'une quelconque des revendications précédentes, ***caractérisé en ce* qu'**il comporte une butée montée sur ressort et destinée à limiter l'angle de rotation.

79. Le montage selon l'une quelconque des revendications précédentes, ***caractérisé en ce qu'**au* moins l'une des lames de ressort (377) interagit avec des corps de roulement (379, 381) dans des zones radialement espacées.

80. Le montage selon l'une quelconque des revendications précédentes, ***caractérisé en ce qu'**au* moins l'une des lames de ressort (377) est pressée contre les corps de roulement (379, 381) au moyen d'un ressort (382).

81. Le montage selon l'une quelconque des revendications précédentes, ***caractérisé en ce que*** le ressort (401) est une partie de la lame de ressort (402).
